# EUROPEAN PATENT APPLICATION

(11) **EP 4 780 053 A1**
(43) Date of publication of application: **22.07.2026**
(21) Application number: 24871052.7
(22) Date of filing: 27.09.2024
(51) Int. Cl.: H04W 24/04

(54) **COMMUNICATION METHOD, APPARATUS AND SYSTEM**

(30) Priority: 28.09.2023 CN 202311292789
(71) Applicant: HUAWEI TECHNOLOGIES CO., LTD., Shenzhen 518129 (CN)
(72) Inventor: SUN, Xiaoji, Shenzhen, Guangdong 518129 (CN); LI, Hairong, Shenzhen, Guangdong 518129 (CN)
(74) Representative: Pfenning, Meinig & Partner mbB
(86) International application number: PCT/CN2024/122048
(87) International publication number: WO 2025/067517

(57) **Abstract**

Embodiments of this application disclose a communication method, apparatus, and system, and relate to the field of communication technologies, to resolve a problem that a local area network group cannot operate normally when a session management network element is faulty. The method includes: receiving a first session establishment request message from a first session management network element, and receiving a second session establishment request message from a second session management network element, where both the first session management network element and the second session management network element are configured to provide a session management function for a target local area network; and establishing a first group session based on the first session establishment request message, and establishing a second group session based on the second session establishment request message. Embodiments of this application are applied to local area network group management.

## Description

This application claims priority to Chinese Patent Application No. 202311292789.8, filed with the China National Intellectual Property Administration on September 28, 2023 and entitled "COMMUNICATION METHOD, APPARATUS, AND SYSTEM", which is incorporated herein by reference in its entirety.

### TECHNICAL FIELD

This application relates to the communication field, and in particular, to a communication method, apparatus, and system.

### BACKGROUND

A 5th generation (5th generation, 5G) local area network (local area network, 5G LAN) service is provided by a current 5G network, mainly used in home communication, enterprise office, factory manufacturing, internet of vehicles, power grid reconstruction, public security organizations, and the like. The service can provide private communication of either internet protocol (internet protocol, IP) type or non-IP type (for example, an Ethernet type) for two or more terminals in a group of terminals. For example, devices in a factory may form a group, and the devices in the group may send Ethernet data packets to each other; or office devices (such as mobile phones, computers, or laptop computers) of employees in a department of an enterprise may form a group, and the office devices send IP data packets to each other. If two terminals are not in a same group, they cannot communicate with each other.

Currently, a session management network element (session management function, SMF) is usually used to manage terminals in a 5G LAN group. When the SMF that manages the 5G LAN group is faulty, the 5G LAN group cannot operate normally, and services within the group are to be lost. Therefore, how to prevent the 5G LAN group from becoming inoperative during the SMF failure is an urgent technical problem to be resolved currently.

### SUMMARY

Embodiments of this application provide a communication method, apparatus, and system, to avoid a problem that a 5G LAN group cannot operate normally when an SMF is faulty.

To achieve the foregoing objective, this application provides the following technical solutions.

According to a first aspect, a communication method is provided. The method may be performed by a first user plane network element, or may be performed by a component of the first user plane network element, for example, a processor, a chip, or a chip system of the first user plane network element, or may be implemented by a logical module or software that can implement all or some of the first user plane network elements. An example in which the method is performed by the first user plane network element is used below for description. The communication method includes: receiving a first session establishment request message from a first session management network element, and receiving a second session establishment request message from a second session management network element, where both the first session management network element and the second session management network element are configured to provide a session management function for a target local area network; the first session establishment request message is used to request to establish a first group session between the first session management network element and the first user plane network element, and the second group session establishment request message is used to request to establish a second group session between the second session management network element and the first user plane network element; and both the first group session and the second group session are group sessions of the target local area network; and establishing the first group session based on the first session establishment request message, and establishing the second group session based on the second session establishment request message.

In embodiments of this application, the first user plane network element separately establishes group sessions with the first session management network element and the second session management network element. In this way, when one of the session management network elements is faulty, a terminal may quickly switch, based on a group session between the first user plane network element and the other session management network element, to the other session management network element for service transmission, thereby resolving a problem in conventional technologies that a local area network group cannot operate normally when the session management network element is faulty.

With reference to the first aspect, in a possible implementation, both the first session management network element and the second session management network element are session management network elements in a first session management network element list; and a plurality of session management network elements in the first session management network element list are all configured to provide the session management function for the target local area network.

Based on this, a plurality of session management network elements that provide the session management function for the target local area network are preconfigured in the first session management network element list. When selecting a session management network element to be accessed for the terminal, an access and mobility management network element may select one session management network element from the plurality of session management network elements. When a currently serving session management network element is faulty, a session management network element may be directly selected from other session management network elements in the list to provide the session management function service for the terminal.

With reference to the first aspect, in a possible implementation, the second session establishment request is a group session establishment request message generated by the second session management network element after a first terminal is disconnected from the first session management network element and re-accesses the second session management network element; or the second group session establishment request is a group session establishment request message generated by the second session management network element after a second terminal accesses the second session management network element, where both the first terminal and the second terminal are terminals in the target local area network.

Based on this, the first terminal may re-access the second session management network element when the first session management network element is faulty, so that the first terminal reestablishes a group session based on the second session management network element, and the second session management network element may perform group session management on the first terminal based on the re-established group session.

Alternatively, during access, the second terminal directly accesses the second session management network element, and establishes a group session based on the second session management network element. In this way, in embodiments of this application, both the two session management network elements manage the target local area network, and both the two session management network elements establish group sessions with the first user plane network element. When one of the session management network elements is faulty, a terminal managed by the faulty session management network element may quickly access the other session management network element based on the group session between the other session management network element and the first user plane network element.

With reference to the first aspect, in a possible implementation, the first group session establishment request message includes at least one of the following: an identifier of the target local area network and a first forwarding rule, and the first forwarding rule represents a rule for forwarding data by the first user plane network element.

Based on this, the first session management network element indicates, in the first group session establishment request, the first forwarding rule for forwarding the data by the first user plane network element, so that the first user plane network element completes data forwarding based on the first forwarding rule in a subsequent data forwarding process.

With reference to the first aspect, in a possible implementation, the first forwarding rule includes at least one of the following: a first downlink BUM forwarding rule, a first uplink BUM forwarding rule, and an inter-user plane network element BUM forwarding rule, where the first downlink BUM forwarding rule is: A target user plane network element forwards a downlink BUM data packet to each terminal that is in the local area network and that accesses the target user plane network element, and does not forward the downlink BUM data packet to an N19 interface, where the target user plane network element is a user plane network element that receives the first forwarding rule; the first uplink BUM forwarding rule is: The target user plane network element forwards an uplink BUM data packet to the N19 interface and an N6 interface, and sends the uplink BUM data packet to a third terminal, where the third terminal is a terminal, other than a terminal that sends the uplink BUM data packet, in terminals that are in the local area network and that access the target user plane network element; and the inter-user plane network element BUM forwarding rule is: The target user plane network element forwards inter-user plane network element BUM to each terminal that is in the local area network and that accesses the target user plane network element.

Based on this, based on the first forwarding rule, specific forwarding manners for forwarding uplink BUM data, downlink BUM data, and inter-N19 interface BUM data are respectively provided. The first user plane network element may forward the uplink BUM data, the downlink BUM data, and the inter-N19 interface BUM data in these specific forwarding manners.

With reference to the first aspect, in a possible implementation, the first forwarding rule includes at least one of the following: a second downlink BUM forwarding rule and a second uplink BUM forwarding rule, where the second downlink BUM forwarding rule is: A target user plane network element forwards a downlink BUM data packet to each terminal that is in the local area network and that accesses the target user plane network element, where the target user plane network element is a user plane network element that receives the first forwarding rule; and the second uplink BUM forwarding rule is: The target user plane network element forwards an uplink BUM data packet to an N6 interface, and sends the uplink BUM data packet to a fourth terminal, where the fourth terminal is a terminal, other than a terminal that sends the uplink BUM data packet, in terminals that are in the local area network and that access the target user plane network element.

Based on this, based on the first forwarding rule, specific forwarding manners for forwarding the uplink BUM data and the downlink BUM data are respectively provided. The first user plane network element may forward the uplink BUM data and the downlink BUM data in these specific forwarding manners.

With reference to the first aspect, in a possible implementation, the method further includes: sending a first response message to the first session management network element, where the first response message indicates that the first user plane network element has established the first group session, and the first response message includes at least one of the following: the third tunnel identifier allocated by the second user plane network element to the target local area network group and a node identifier of the first user plane network element; and sending a second response message to the second session management network element, where the second response message indicates that the first user plane network element has established the second group session, and the second response message includes at least one of the following: a second tunnel identifier allocated by the first user plane network element to the second group session and the node identifier of the first user plane network element.

Based on this, after establishing the first group session and the second group session, the first user plane network element separately sends response messages to the first session management network element and the second session management network element, and indicates, in the response messages, tunnel identifiers allocated to the group sessions and the node identifier of the first user plane network element. In this way, the first session management network element and the second session management network element may subsequently establish a transmission path based on tunnel information allocated to the group sessions, to perform data forwarding.

With reference to the first aspect, in a possible implementation, when a plurality of user plane network elements communicate with each other through preset interfaces, the first tunnel identifier and the second tunnel identifier are tunnel identifiers associated with the preset interfaces, and the plurality of user plane network elements include the first user plane network element.

Based on this, when the user plane network elements need to communicate with each other through the preset interfaces (for example, N19 interfaces), a tunnel identifier allocated by the user plane network element to the group session is an identifier of the preset interface. In this way, when inter-user plane network element data transmission is subsequently performed, the user plane network elements may directly perform data transmission based on a tunnel corresponding to the allocated tunnel identifier.

With reference to the first aspect, in a possible implementation, the method further includes: determining group subscription attribute information of the target local area network; and determining, based on the group subscription attribute information, that the plurality of user plane network elements communicate with each other through the preset interfaces.

Based on this, the first user plane network element may determine, based on the group subscription attribute information, whether the plurality of user plane network elements communicate with each other through the preset interfaces.

With reference to the first aspect, in a possible implementation, a manner of determining the group subscription attribute information of the target local area network includes at least one of the following: obtaining the group attribute subscription information preconfigured in the first user plane network element; and/or receiving the group attribute subscription information from the first session management network element, where the group attribute subscription information is preconfigured in the first session management network element, and/or the group attribute subscription information is obtained by the first session management network element from a unified data management network element.

Based on this, in embodiments of this application, three manners of determining group subscription data information of the target local area network are provided: pre-configuration in the user plane network element, pre-configuration in the first session management network element, and pre-configuration in the unified data management network element. When preconfigured in the first session management network element or the unified data management network element, the group subscription data information of the target local area network may be obtained by the first session management network element, and sent to the first user plane network element.

With reference to the first aspect, in a possible implementation, the method further includes: receiving a first session modification request message from the first session management network element or the second session management network element, where the first session modification request message carries a second forwarding rule, and the second forwarding rule represents a forwarding rule for broadcasting data by the first user plane network element.

Based on this, the first session management network element may supplement and update the forwarding rule of the first user plane network element, so that the first user plane network element can forward data based on a supplemented and updated forwarding rule.

With reference to the first aspect, in a possible implementation, the second forwarding rule further includes a third tunnel identifier allocated by a second user plane network element to the target local area network and a node identifier of the second user plane network element; and the second user plane network element is a user plane network element configured to provide a user plane function for the target local area network.

Based on this, the first session management network element or the second session management network element sends, to the first user plane network element, the third tunnel identifier allocated by the second user plane network element to the target local area network and the node identifier of the second user plane network element, so that the first user plane network element implements inter-user plane network element transmission with the second user plane network element based on the third tunnel identifier and the node identifier of the second user plane network element.

With reference to the first aspect, in a possible implementation, the method further includes: receiving a second session modification request message from the first session management network element, where the second session modification request message carries a third forwarding rule, and the third forwarding rule represents a forwarding rule for forwarding, by the first user plane network element, data whose destination address is a first media access control MAC address; establishing a first correspondence between the first MAC address and a first terminal session, where the first terminal session is a session of a terminal that reports the first MAC address; and recording the first correspondence in the group session of the target local area network, where the first correspondence is used for forwarding, by the first user plane network element by using the first terminal session, a data packet whose destination address is the first MAC address.

Based on this, the first user plane network element may determine, based on the second session modification request message sent by the first session management network element, the forwarding rule for the data whose destination address is the first MAC address, so that the first user plane network element may subsequently forward, based on the forwarding rule, the data whose destination address is the first MAC address.

With reference to the first aspect, in a possible implementation, the first MAC address is a unicast MAC address of a fourth terminal, and the fourth terminal is a terminal that accesses the first session management network element.

Based on this, the first user plane network element may forward data of the unicast MAC address of the fourth terminal based on a forwarding rule for the unicast MAC address of the fourth terminal.

With reference to the first aspect, in a possible implementation, the method further includes: receiving uplink unicast packet data from the fourth terminal, where the uplink unicast packet data includes the unicast MAC address of the fourth terminal; and sending the unicast MAC address of the fourth terminal to the first session management network element.

Based on this, the first user plane network element may obtain the unicast MAC address of the fourth terminal from an uplink unicast packet of the fourth terminal, and send the unicast MAC address of the fourth terminal to the first session management network element, so that the first session management network element generates, based on the unicast MAC address of the fourth terminal, the forwarding rule corresponding to the unicast MAC address of the fourth terminal.

With reference to the first aspect, in a possible implementation, the first MAC address is a multicast MAC address of the first group session.

Based on this, the first user plane network element may forward data of the multicast MAC address of the first group session based on a forwarding rule for the multicast MAC address of the first group session.

With reference to the first aspect, in a possible implementation, the method further includes: receiving first multicast packet data from a fifth terminal, where the first multicast packet data includes the multicast MAC address of the first group session; and sending the multicast MAC address of the first group session to the first session management network element and the second session management network element.

Based on this, the first user plane network element may obtain the multicast MAC address of the first group session from a first multicast packet of the fifth terminal, and send the multicast MAC address of the first group session from the fifth terminal to the first session management network element, so that the first session management network element generates, based on the multicast MAC address of the first group session, a forwarding rule corresponding to the multicast MAC address of the first group session.

With reference to the first aspect, in a possible implementation, the method further includes: receiving a third session modification request message from the second session management network element, where the third session modification request message carries a fourth forwarding rule, and the fourth forwarding rule represents a forwarding rule for forwarding, by the first user plane network element, data whose destination address is a second MAC address; and sending a third session modification response message to the second session management network element.

Based on this, the first user plane network element may determine, based on the third session modification request message sent by the second session management network element, the forwarding rule for the data whose destination address is the second MAC address, so that the first user plane network element may forward, based on the forwarding rule, the data whose destination address is the second MAC address in subsequent forwarding.

With reference to the first aspect, in a possible implementation, the second MAC address is a unicast MAC address of a sixth terminal, and the sixth terminal is a terminal that accesses the second session management network element.

Base on this, the first user plane network element may forward data of the unicast MAC address of the sixth terminal based on a forwarding rule for the unicast MAC address of the sixth terminal.

With reference to the first aspect, in a possible implementation, the unicast MAC address of the sixth terminal is obtained by the second user plane network element from uplink unicast packet data of the sixth terminal.

Based on this, the second user plane network element may obtain the unicast MAC address of the sixth terminal from an uplink unicast packet of the sixth terminal, and send the unicast MAC address of the sixth terminal to the second session management network element, so that the second session management network element generates, based on the unicast MAC address of the sixth terminal, the forwarding rule corresponding to the unicast MAC address of the sixth terminal.

With reference to the first aspect, in a possible implementation, the fourth forwarding rule further indicates the third tunnel identifier allocated by the second user plane network element to the target local area network group.

Based on this, the first session management network element sends, to the first user plane network element, the third tunnel identifier allocated by the second user plane network element to the target local area network, so that the first user plane network element implements inter-user plane network element transmission with the second user plane network element based on the third tunnel identifier.

With reference to the first aspect, in a possible implementation, the second MAC address is a multicast MAC address of the second group session.

Based on this, the first user plane network element may forward data of the multicast MAC address of the second group session based on a forwarding rule for the multicast MAC address of the second group session.

With reference to the first aspect, in a possible implementation, the multicast MAC address of the second group session is obtained by the second user plane network element from second multicast packet data of a seventh terminal, and the seventh terminal is a terminal that accesses the second session management network element.

Based on this, the second user plane network element may obtain the multicast MAC address of the second group session from a multicast packet of the seventh terminal, and send the multicast MAC address of the seventh terminal to the second session management network element, so that the second session management network element generates, based on the multicast MAC address of the seventh terminal, the forwarding rule corresponding to the multicast MAC address of the second group session.

With reference to the first aspect, in a possible implementation, the method further includes: when it is detected that the first session management network element is faulty, establishing a terminal session between the first user plane network element and the second session management network element for a target terminal, where the target terminal is a terminal in the local area network, and the target terminal accesses the first session management network element before the first session management network element is faulty and re-accesses the second session management network element after the first session management network element is faulty.

Based on this, when detecting that the first session management network element is faulty, the first user plane network element establishes the terminal session between the second session management network element and the first user plane network element for the target terminal, so that the target terminal accesses the second session management network element that is not faulty, and the target terminal can normally perform a group service of the local area network.

With reference to the first aspect, in a possible implementation, the method further includes: deleting the terminal session registered by the target terminal with the first session management network element, and deleting a group session associated with the first session management network element.

Based on this, when the first session management network element is faulty, the first user plane network element deletes the terminal session and the group session of the first session management network element, to save network resources of the first user plane network element.

According to a second aspect, a communication method is provided. The method may be performed by an access and mobility management network element, or may be performed by a component of the access and mobility management network element, for example, may be performed by a processor, a chip, or a chip system of the access and mobility management network element, or may be implemented by a logical module or software that can implement all or some of the access and mobility management network elements. An example in which the method is performed by the access and mobility management network element is used below for description. The communication method includes: receiving a first session establishment request from an eighth terminal, where the eighth terminal is a terminal in a target local area network, and the first session establishment request is used to request to establish a session for the eighth terminal; in response to the first session establishment request, selecting a first session management network element from a first session management network element list, where the first session management network element list includes a plurality of session management network elements that provide a session management function for the target local area network; and sending a second session establishment request to the first session management network element, where the second session establishment request is used to request to establish a session for the eighth terminal.

In embodiments of this application, after receiving the first session establishment request of the terminal, the access and mobility management network element selects, from the plurality of session management network elements in the first session management network element list, a session management network element to be accessed for the eighth terminal. The first session management network element list includes the plurality of session management network elements that provide the session management function for the target local area network. When a current serving session management network element is faulty, the access and mobility management network element may select a session management network element from other session management network elements in the list to continue to provide the session management function service for the terminal.

With reference to the second aspect, in a possible implementation, the method further includes: sending a session management network element list request message to a network repository network element, where the session management network element list request message is used to request a session management network element that provides the session management function for the target local area network; and receiving a session management network element list response message from the network repository network element, where the session management network element list response message indicates the first session management network element list.

Based on this, the plurality of session management network elements may pre-register with the network repository network element to support the target local area network. When the access and mobility management network element requests the network repository network element for a session management network element that supports the target local area network, the first session management network element list including the plurality of session management network elements may be sent to the access and mobility management network element, so that the access and mobility management network element can select, from the plurality of session management network elements in the first session management network element list, a session management network element to be accessed for the terminal.

With reference to the second aspect, in a possible implementation, the method further includes: selecting the first session management network element based on loads of the plurality of session management network elements in the first session management network element list.

Based on this, the access and mobility management network element can select the session management network element to be accessed for the terminal in a load sharing manner, so that load balancing is implemented between the plurality of session management network elements in the first session management network element list.

According to a third aspect, a communication apparatus is provided, to implement the foregoing methods. The communication apparatus may be the first user plane network element according to any one of the first aspect or the implementations of the first aspect, or an apparatus including the first user plane network element, or an apparatus included in the first user plane network element, for example, a chip. Alternatively, the communication apparatus may be the access and mobility management network element according to any one of the second aspect or the implementations of the second aspect, or an apparatus including the access and mobility management network element, or an apparatus included in the access and mobility management network element, for example, a chip. The communication apparatus includes a corresponding module, unit, or means (means) for implementing the foregoing methods. The module, unit, or means may be implemented by hardware, software, or hardware executing corresponding software. The hardware or the software includes one or more modules or units corresponding to the foregoing functions.

In some possible designs, the communication apparatus may include a processing module and a transceiver module. The transceiver module may also be referred to as a transceiver unit, and is configured to implement a sending function and/or a receiving function according to any one of the foregoing aspects and any one of the possible implementations of the foregoing aspects. The transceiver module may include a transceiver circuit, a transceiver machine, a transceiver, or a communication interface. The processing module may be configured to implement a processing function according to any one of the foregoing aspects and any one of the possible implementations of the foregoing aspects.

In some possible designs, the transceiver module includes a sending module and a receiving module, respectively configured to implement the sending function and the receiving function according to any one of the foregoing aspects and any one of the possible implementations of the foregoing aspects.

According to a fourth aspect, a communication apparatus is provided, including at least one processor. The processor is configured to execute a computer program or instructions stored in a memory, so that the communication apparatus performs the method according to any one of the foregoing aspects. The memory may be coupled to the processor, or may be independent of the processor. The communication apparatus may be the first user plane network element according to any one of the first aspect or the implementations of the first aspect, or an apparatus including the first user plane network element, or an apparatus included in the first user plane network element, for example, a chip. Alternatively, the communication apparatus may be the access and mobility management network element according to any one of the second aspect or the implementations of the second aspect, or an apparatus including the access and mobility management network element, or an apparatus included in the access and mobility management network element, for example, a chip.

In some possible designs, the communication apparatus includes a memory, and the memory is configured to store necessary program instructions and data.

In a possible implementation, the processor includes a logic circuit and an input interface and/or an output interface. The output interface is configured to perform a sending action in a corresponding method, and the input interface is configured to perform a receiving action in a corresponding method.

In a possible implementation, the communication apparatus further includes a communication interface and a communication bus, and the processor, the memory, and the communication interface are connected through the communication bus. The communication interface is configured to perform a sending and receiving action in a corresponding method. The communication interface may also be referred to as a transceiver. Optionally, the communication interface includes a transmitter or a receiver. In this case, the transmitter is configured to perform the sending action in the corresponding method, and the receiver is configured to perform the receiving action in the corresponding method.

In some possible designs, when the communication apparatus is a chip system, the communication apparatus may include a chip, or may include a chip and another discrete component.

It may be understood that, when the communication apparatus provided according to any one of the second aspect and the third aspect is a chip, the foregoing sending action/function may be understood as an output, and the foregoing receiving action/function may be understood as an input.

According to a fifth aspect, a computer-readable storage medium is provided. The computer-readable storage medium stores a computer program or instructions. When the computer program or the instructions are run on a communication apparatus, the communication apparatus is caused to perform the method according to any one of the foregoing aspects or the implementations of the foregoing aspects.

According to a sixth aspect, a computer program product including instructions is provided. When the computer program product runs on a communication apparatus, the communication apparatus is caused to perform the method according to any one of the foregoing aspects or the implementations of the foregoing aspects.

According to a seventh aspect, a communication system is provided. The communication system includes a first user plane network element, a first session management network element, and a second session management network element, where both the first session management network element and the second session management network element are configured to provide a session management function for a target local area network; the first session management network element is configured to send a first session establishment request message to the first user plane network element, and the first session establishment request message is used to request to establish a first group session between the first session management network element and the first user plane network element; the second session management network element is configured to send a second session establishment request message to the first user plane network element, the second session establishment request message is used to request to establish a second group session between the second session management network element and the first user plane network element, and both the first group session and the second group session are group sessions of the target local area network; and the first user plane network element is configured to: receive the first session establishment request message from the first session management network element, receive the second session establishment request message from the second session management network element, establish the first group session based on the first session establishment request message, and establish the second group session based on the second session establishment request message.

With reference to the seventh aspect, in a possible implementation, the communication system further includes an access and mobility management network element, where the access and mobility management network element is configured to obtain a first session management network element list, a plurality of session management network elements in the first session management network element list are all configured to provide the session management function for the target local area network, and the plurality of session management network elements include the first session management network element and the second session management network element; and the access and mobility management network element is further configured to select the first session management network element from the first session management network element list.

With reference to the seventh aspect, in a possible implementation, the communication system further includes a second user plane network element, where the first session management network element is further configured to send a third session establishment request message to the second user plane network element, and the third session establishment request message is used to request to establish a third group session between the first session management network element and the second user plane network element; the second session management network element is configured to send a fourth session establishment request message to the second user plane network element, the fourth session establishment request message is used to request to establish a fourth group session between the second session management network element and the second user plane network element, and both the third group session and the fourth group session are group sessions of the target local area network; and the second user plane network element is configured to: receive the third session establishment request message from the first session management network element, receive the fourth session establishment request message from the second session management network element, establish the third group session based on the third session establishment request message, and establish the fourth group session based on the fourth session establishment request message.

For technical effects achieved by any implementation of the third aspect to the seventh aspect, refer to technical effects achieved by corresponding implementations of the first aspect or the second aspect. Details are not described herein again.

It should be noted that various possible implementations of any one of the foregoing aspects may be combined provided that the solutions are not contradictory.

### BRIEF DESCRIPTION OF DRAWINGS

FIG. 1 is a diagram of an architecture of a 5G LAN communication forwarding model according to an embodiment of this application;
FIG. 2A and FIG. 2B are a schematic flowchart of establishing a group session and a terminal session for a 5G LAN group according to an embodiment of this application;
FIG. 3 is a first diagram of an architecture of a communication system according to an embodiment of this application;
FIG. 4 is a schematic flowchart of a communication method applied to a communication system according to an embodiment of this application;
FIG. 5 is a second diagram of an architecture of a communication system according to an embodiment of this application;
FIG. 6 is an application diagram of a communication system in a 5G network according to an embodiment of this application;
FIG. 7 is a diagram of an architecture of a user plane of an existing 5G LAN service according to an embodiment of this application;
FIG. 8 is a diagram of a hardware structure of a communication apparatus according to an embodiment of this application;
FIG. 9 is a first schematic flowchart of a communication method according to an embodiment of this application;
FIG. 10 is a second schematic flowchart of a communication method according to an embodiment of this application;
FIG. 11 is a third schematic flowchart of a communication method according to an embodiment of this application;
FIG. 12 is a fourth schematic flowchart of a communication method according to an embodiment of this application; and
FIG. 13 is a diagram of a structure of a communication apparatus according to an embodiment of this application.

### DESCRIPTION OF EMBODIMENTS

In descriptions of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In addition, in the descriptions of this application, "a plurality of" means two or more unless otherwise specified. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, the term "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments in any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not need a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein again.

In this application, unless otherwise specified, for same or similar parts in embodiments, refer to each other. In embodiments of this application and the implementations/methods/implementation methods in embodiments, unless otherwise specified or a logical conflict occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship thereof. The following implementations of this application are not intended to limit the protection scope of this application.

In a related technology, a connection manner between devices in an enterprise intranet is usually a wired Ethernet connection. With development of a 5G network, the connection manner of the devices in the enterprise intranet may be updated from the wired Ethernet connection to a 5G network-based wireless connection. The wireless connection has advantages of fast deployment, mobile adjustment, and low costs in a long-distance scenario, and can also avoid a problem of wear and aging in the wired connection.

In an existing 5G LAN solution defined in the 3rd generation partnership project (3rd generation partnership project, 3GPP) protocol, a 5G local area network service for an enterprise intranet scenario is provided to replace an existing enterprise intranet networking manner including a wired local area network (local area network, LAN) and a wireless local area network (wireless local area network, WLAN). The 5G local area network service can provide a LAN service for a user anytime and anywhere based on a 5G cellular network, manage a terminal group, and provide layer (layer, L) 2 and L3-based data exchange and a plurality of layer (layer, L) 2 and L3-based communication modes for the terminal group. This effectively reduces a delay of the local area network, expands a local area network service scope, reduces deployment costs, and improves management convenience.

Currently, a 5G LAN group is defined for a 5G local area network type service. The 5G LAN group corresponds to a layer 2 broadcast domain in the enterprise wired local area network. Communication models of the 5G LAN group are of the following three types: switching and forwarding in a single user plane function (user plane function, UPF), communication between a terminal and a data network (data network, DN) side server, and inter-UPF forwarding between terminals. A shared basic forwarding mechanism of the three types is as follows: The UPF learns a media access control (media access control, MAC) address behind the terminal based on a data packet sent by the terminal, and reports, by using a MAC address reporting mechanism via an N4 interface, the MAC address behind the terminal to an SMF with which the terminal registers. The SMF generates a packet detection rule (packet detection rule, PDR) policy and a forwarding action rule (forwarding action rule, FAR) policy based on the received MAC address, and delivers the PDR and FAR policies to the UPF. The UPF forwards the data packet based on the PDR and FAR policies.

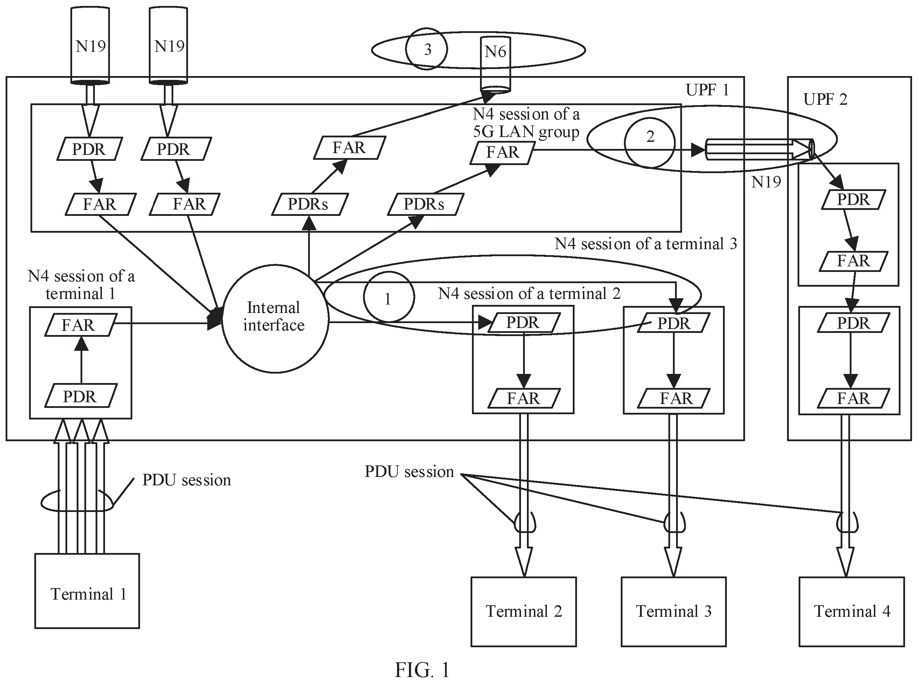

FIG. 1 shows a communication forwarding model of a 5G LAN in a related technology. In FIG. 1, a terminal 1, a terminal 2, and a terminal 3 access a UPF 1, and a terminal 4 accesses a UPF 2. The terminal 1, the terminal 2, and the terminal 3 each establish protocol data unit (protocol data unit, PDU) session with the UPF 1, and a PDU session is established between the terminal 4 and the UPF 2. The UPF 1 includes an N4 session of the terminal 1, an N4 session of the terminal 2, and an N4 session of the terminal 3. The UPF 2 includes an N4 session of the terminal 4. In addition, the UPF 1 further includes an N4 session of the 5G LAN group. The N4 session includes a PDR and a FAR of a corresponding terminal. The UPF may forward data of a corresponding terminal or terminal group based on a PDR and a FAR of the terminal or the terminal group. Data transmission is performed between the UPF 1 and the UPF 2 through an N19 interface. The UPF may further be connected to a data network through an N6 interface.

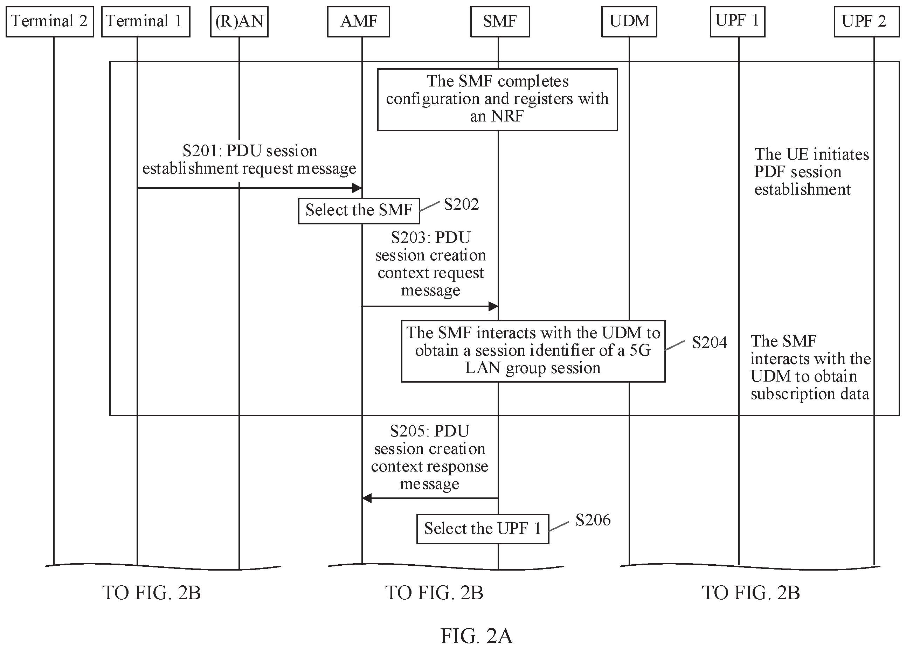

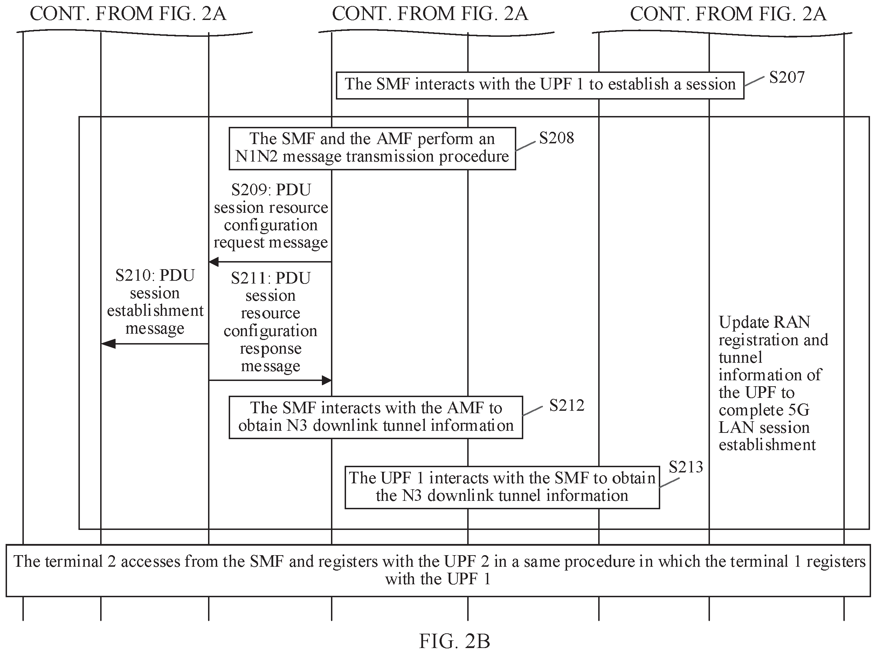

With reference to the communication forwarding model of the 5G LAN shown in FIG. 1, the 5G LAN group is defined in 3GPP R18. All terminals in one 5G LAN group may be managed by one SMF instance, one SMF set (SMF set), or a plurality of SMF sets. However, currently, how to implement intra-group data forwarding under different SMFs when a plurality of different SMFs serve one group is not defined. When intra-group data under different SMFs cannot be forwarded to each other, after one SMF is faulty, an intra-group service in the SMF is lost, and consequently, a 5G LAN service cannot be normally performed. FIG. 2A and FIG. 2B show, in a related technology, a process in which the terminal interacts with network elements such as an access network and a core network to establish a group session and a terminal session for the 5G LAN group. The process includes the following steps.

S201: A terminal 1 sends a PDU session establishment request message to an access and mobility management function (core access and mobility management function, AMF). Correspondingly, the AMF receives the PDU session establishment request message from the terminal 1.

In a possible implementation, the PDU session establishment request message carries at least one of the following: a tracking area identity (tracking area identity, TAI), a subscription permanent identifier (subscription permanent identifier, SUPI), a data network name (Data Network Name, DNN), a slice (Slice), and a PDU session type (Ethernet).

In an example, the PDU session establishment request message is PDU session establishment request.

S202: The AMF selects an SMF.

In a possible implementation, the AMF selects, based on the DNN, the slice, and location information (for example, the TAI) in the PDU session establishment request message, an SMF that can provide a service for a terminal in the 5G LAN group.

It should be noted that, in a related technology, the AMF may select, from an SMF set from a perspective of service deployment, an SMF for a 5G LAN service to provide a service for the 5G LAN group.

S203: The AMF sends a PDU session creation context request message to the SMF. Correspondingly, the SMF receives the PDU session creation context request message from the AMF.

The SMF is the SMF selected by the AMF in S202.

In a possible implementation, the PDU session creation context request message carries at least one of the following: the DNN and the slice.

In an example, the PDU session creation context request message is Nsmf_PDUSession_CreateSMContext Request.

S204: The SMF interacts with a unified data management (unified data management, UDM) network element to obtain a session identifier of a 5G LAN group session.

The 5G LAN group session is a 5G LAN group session based on a DNN/slice/PDU session type.

In a possible implementation, S204 may be specifically implemented through the following S204a to S204d, and detailed descriptions are provided below.

S204a: The SMF sends a user subscription data request message to the UDM. Correspondingly, the UDM receives the user subscription data request message from the SMF.

In a possible implementation, a parameter carried in the user subscription data request message includes but is not limited to at least one of the following: the TAI, the SUPI, the DNN, the slice, and the PDU session type (Ethernet).

In an example, the user subscription data request message is Nudm_SDM_GetUESessionManagementSubscriptionData Request.

S204b: The UDM sends a user subscription data response message to the SMF. Correspondingly, the SMF receives the user subscription data response message from the UDM.

In a possible implementation, a parameter carried in the user subscription data response message includes but is not limited to at least one of the following: the SUPI, the DNN, the slice, the PDU session type (Ethernet), a quality of service (quality of service, QoS) parameter, sharedVnGroupDataIds, and internalGroupid.

internalGroupid information is a group identifier of the 5G LAN group to which the terminal subscribes.

In an example, the user subscription data response message is Nudm_SDM_GetUESessionManagementSubscriptionData Response.

S204c: The SMF sends a shared data obtaining request message to the UDM. Correspondingly, the UDM receives the shared data obtaining request message from the SMF.

In a possible implementation, the SMF generates the shared data obtaining request message based on sharedVnGroupDataIds in the user subscription data response message. The SMF sends the shared data obtaining request message to the UDM.

In an example, the shared data obtaining request message is Nudm_SDM_GetSharedData Request.

S204d: The UDM sends a shared data obtaining response message to the SMF. Correspondingly, the UDM receives the shared data obtaining response message from the SMF.

In a possible implementation, the shared data obtaining response message is used to feed back, to the SMF, sharedVnGroupDatas corresponding to sharedVnGroupDataIds.

Optionally, a parameter carried in the shared data obtaining response message further includes but is not limited to at least one of the following: the DNN, the slice, and the PDU session type.

In an example, the shared data obtaining response message is Nudm_SDM_GetSharedData Response.

S205: The SMF sends a PDU session creation context response message to the AMF. Correspondingly, the AMF receives the PDU session creation context response message from the SMF.

In an example, the PDU session creation context response message is Nsmf_PDUSession_CreateSMContext Response.

S206: The SMF selects a UPF 1.

In a possible implementation, the SMF selects, based on the DNN, the slice, and the PDU session type (Ethernet), a UPF that supports the 5G LAN.

S207. The SMF interacts with the selected UPF 1 to establish a session.

It should be noted that if the terminal that currently requests to establish the session is a terminal that first performs access in the 5G LAN group corresponding to the UPF, the SMF first triggers group session establishment with the UPF 1, and then establishes a terminal session.

The group session establishment is shown in S207a and S207b. The terminal session establishment is shown in S207c and S207d.

### Group session establishment:

S207a: The SMF sends a first N4 group session establishment request message to the UPF 1. Correspondingly, the UPF 1 receives the first N4 group session establishment request message from the SMF.

The first N4 group session establishment request message is used to request to establish the 5G LAN group session.

In a possible implementation, a parameter carried in the first N4 group session establishment request message includes but is not limited to at least one of the following: a group id, a PDR, an FAR, and a URR. Optionally, the URR further includes a MAC report event.

In an example, the first N4 group session establishment request message is PFCP Session Establishment Request.

S207b: The UPF 1 sends a first N4 group session establishment response message to the SMF. Correspondingly, the SMF receives the first N4 group session establishment response message from the UPF 1.

In other words, after receiving the first N4 group session establishment request message from the SMF, the UPF 1 allocates an N19 F-TEID (which is used for inter-UPF terminal communication), and the UPF 1 establishes the 5G LAN group session, and maintains a relationship between the terminal and the 5G LAN group, so that the UPF 1 can quickly locate the terminal session in a subsequent data packet transmission process. The UPF 1 generates the first N4 group session establishment response message based on the N19 F-TEID, and sends the first N4 group session establishment response message to the SMF.

In a possible implementation, after the group session is successfully established, the SMF may send a group session modification request message to the UPF 1, where the group session modification request message carries the PDR and the FAR. In addition, after obtaining multicast MAC, the UPF 1 sends the multicast MAC to the SMF. The SMF generates a corresponding PAR/FAR based on the multicast MAC, and sends the PAR/FAR corresponding to the multicast MAC to the UPF 1, so that the UPF 1 can implement, based on the PAR/FAR corresponding to the multicast MAC, inter-UPF N19 forwarding and forwarding in the UPF.

In an example, the first N4 group session establishment response message is PFCP Session Establishment Response.

### a. Terminal session establishment:

S207c: The SMF sends a second N4 group session establishment request message to the UPF 1. Correspondingly, the UPF 1 receives the second N4 group session establishment request message from the SMF.

The second N4 group session establishment request message is used to request to establish the terminal session.

In a possible implementation, a parameter carried in the second N4 group session establishment request message includes but is not limited to at least one of the following: a session type (the terminal session), the PDR, the FAR, and a usage reporting rule (usage reporting rule, URR). The URR further indicates the UPF to report a MAC address corresponding to the terminal session. After obtaining the MAC address of the terminal, the UPF reports the MAC address to the SMF based on a URR event. The SMF notifies another UPF in the group of the MAC address to implement inter-UPF communication.

In an example, the second N4 group session establishment request message is PFCP Session Establishment Request.

### b. Group session establishment:

S207d: The UPF 1 sends a second N4 group session establishment response message to the SMF. Correspondingly, the SMF receives the second N4 group session establishment response message from the UPF.

In other words, after receiving the second N4 group session establishment request message, the UPF 1 allocates a corresponding F-TEID based on the request, and determines an association relationship between the terminal session and the 5G LAN group session. The UPF 1 generates the second N4 group session establishment response message based on the corresponding F-TEID, and sends the message to the SMF.

In an example, the second N4 group session establishment response message is PFCP Session Establishment Response.

S208: The SMF and the AMF perform an N1N2 message transmission procedure.

In an example, the N1N2 message transmission procedure is a Namf_Communication_N1N2MessageTransfer procedure.

In other words, the SMF sends a Namf_Communication_N1N2MessageTransfer message to the AMF, and the AMF sends a response message to the SMF.

The Namf_Communication_N1N2MessageTransfer message carries N2 SM information. The N2 SM information includes an N3 uplink TEID allocated by the UPF 1, and the N3 uplink TEID is used to instruct a radio access network (radio access network, RAN) side to update N3 tunnel uplink peer tunnel information to the UPF 1.

S209: The AMF sends a PDU session resource configuration request message to the RAN. Correspondingly, the RAN receives the PDU session resource configuration request message from the AMF.

The PDU session resource configuration request message carries N3 uplink tunnel information.

In an example, the PDU session resource configuration request message is PDU Session Resource Setup Request.

S210: The RAN sends a PDU session establishment message to the terminal 1. Correspondingly, the terminal 1 receives the PDU session establishment message from the RAN.

The PDU session establishment message includes PDU Session ID.

S211: The RAN sends a PDU session resource configuration response message to the AMF. Correspondingly, the AMF receives the PDU session resource configuration response message from the RAN.

The PDU session resource configuration response message includes N3 downlink tunnel information AN Tunnel Info allocated by the UPF.

In an example, the PDU session resource configuration response message is PDU Session Resource Setup Response.

S212: The SMF interacts with the AMF to obtain the N3 downlink tunnel information (AN Tunnel Info).

In a possible implementation, S202 may be specifically implemented through the following S212a and S212b.

S212a: The AMF sends a PDU session context update request message to the SMF. Correspondingly, the SMF receives the PDU session context update request message from the AMF.

The PDU session context update request message includes the N3 downlink tunnel information (AN Tunnel Info).

In an example, the PDU session context update request message is Nsmf_PDUSession_UpdateSMContext.

S212b: The SMF sends a PDU session context update response message to the AMF. Correspondingly, the AMF receives the PDU session context update response message from the SMF.

S213: The UPF 1 interacts with the SMF to obtain the N3 downlink tunnel information.

In other words, S213 may be implemented through S213a and S213b.

S213a: The SMF sends a packet forwarding control protocol (packet forwarding control protocol, PFCP) session modification request message to the UPF 1. Correspondingly, the UPF 1 receives the PFCP session modification request message from the SMF.

The PFCP session modification request message includes the N3 downlink tunnel information.

In an example, a PFCP session modification request is PFCP Session Modification Request.

S213b: The UPF 1 sends a PFCP session modification response message to the SMF. Correspondingly, the SMF receives the session modification response message from the UPF 1.

In an example, the PFCP session modification response message is PFCP Session Modification Response.

The foregoing describes a session establishment process after a terminal (for example, the terminal 1) accesses the UPF. A subsequent process in which another terminal (for example, a terminal 2) establishes a session after accessing the UPF is the same as the foregoing process. Details are not described herein again.

It should be noted that, when the terminal accessing the UPF is a terminal that first performs access in the 5G LAN group corresponding to the UPF, the SMF needs to trigger an establishment process of a 5G LAN group session with the UPF (for example, S207a and S207b described above). If the terminal is not a terminal that first performs access, a 5G LAN group session establishment process does not need to be performed, and only a terminal session needs to be established.

It may be understood that FIG. 2A and FIG. 2B are described by using only an example in which the SMF initiates a group session process and a terminal session establishment process to a UPF. The SMF may further interact with another UPF to initiate a group session and a terminal session. For a specific process, refer to the session establishment process recorded in FIG. 2A and FIG. 2B. Details are not described in this application again.

It can be learned from the foregoing process that, in a related technology, a terminal in a terminal group of a local area network accesses an SMF, and the SMF manages the terminal in the terminal group of the local area network. When the SMF is faulty, the terminal in the terminal group cannot continue to perform a local area network service.

To resolve the foregoing technical problem, embodiments of this application provide a communication method. One user plane network element separately establishes group sessions with a plurality of session management network elements. In this way, when one of the session management network elements is faulty, a terminal may quickly switch, based on a group session between the user plane network element and another session management network element, to the another session management network element for service transmission, thereby resolving a problem in conventional technologies that a local area network cannot operate normally when the session management network element is faulty.

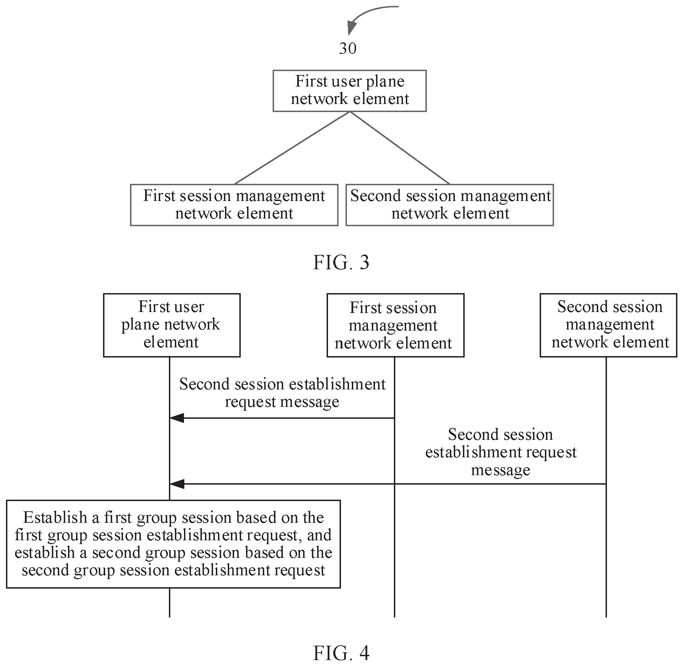

The communication method provided in embodiments of this application may be applied to a communication system shown in FIG. 3. FIG. 3 shows a communication system 30 according to an embodiment of this application. The communication system 30 includes a first user plane network element, a first session management network element, and a second session management network element. The first user plane network element is configured to provide access to a local area network for the terminal. Both the first session management network element and the second session management network element are configured to provide a session management function for a target local area network.

It should be noted that, in this embodiment of this application and the following embodiments, providing access to the local area network may also be described as providing a local area network service. A general description is provided herein, and details are not described below again.

It should be noted that only two session management network elements (namely, the first session management network element and the second session management network element) are shown as an example in FIG. 3. Certainly, there may be another session management network element communicating with the first user plane network element, for example, a third session management network element or a fourth session management network element. This is not specifically limited in embodiments of this application.

It should be noted that FIG. 3 is an example in which only the two session management network elements communicate with one user plane network element. For example, the first session management network element and the second session management network element communicate with the first user plane network element. Certainly, one session management network element may further communicate with a plurality of user plane network elements. For example, the first session management network element may further communicate with a second user plane network element or a third user plane network element (not shown in FIG. 3). This is not specifically limited in embodiments of this application.

It should be noted that connections between the network elements shown in FIG. 3 may be direct communication or communication through forwarding by another device. This is not specifically limited in embodiments of this application.

Based on the communication system 30 shown in FIG. 3, as shown in FIG. 4, an embodiment of this application further provides a communication method applied to the communication system 30 shown in FIG. 3. The method includes: The first session management network element sends a first group session establishment request to the first user plane network element; and the second session management network element sends a second group session establishment request to the first user plane network element. The first user plane network element establishes a first group session based on the first group session establishment request, and establishes a second group session based on the second group session establishment request. The first session establishment request message is used to request to establish the first group session between the first session management network element and the first user plane network element, the second group session establishment request message is used to request to establish the second group session between the second session management network element and the first user plane network element, and both the first group session and the second group session are group sessions of the target local area network. In this way, the first user plane network element separately establishes, for the local area network, group sessions with the first session management network element and the second session management network element. Based on this, even if one of the session management network elements is faulty, a terminal in a local area network group of the faulty session management network element may be migrated to the other session management network element, to avoid a case that the local area network group cannot operate normally due to the fault of the session management network element.

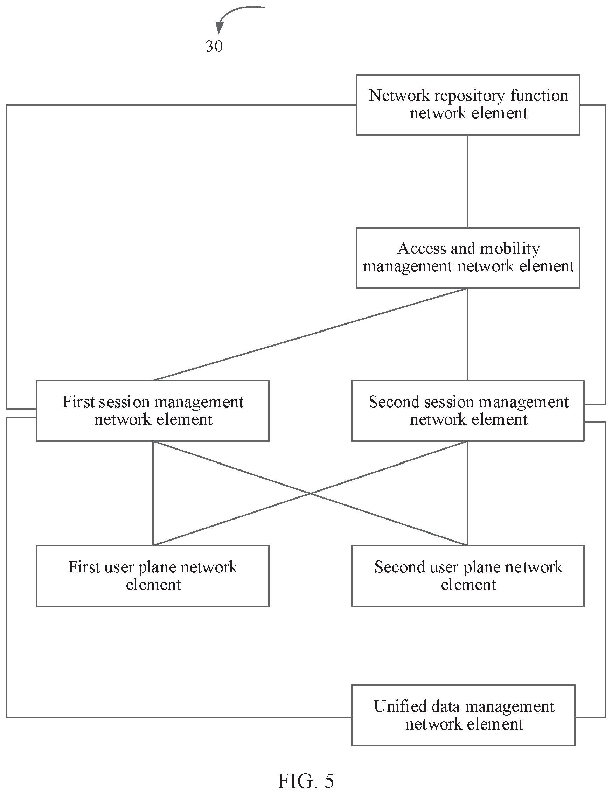

Optionally, as shown in FIG. 5, the communication system 30 further includes an access and mobility management network element. The access and mobility management network element is configured to obtain a first session management network element list, a plurality of session management network elements in the first session management network element list are all configured to provide the session management function for the target local area network, and the plurality of session management network elements include the first session management network element and the second session management network element; and the access and mobility management network element is further configured to select the first session management network element from the first session management network element list.

For example, after a terminal 1 in the local area network accesses a network, the terminal 1 sends an Ethernet PDU session establishment request to the access and mobility management network element. The Ethernet PDU session establishment request carries at least one of a TAI, an SUPI, a DNN, a slice, and a PDU session type (Ethernet). The access and mobility management network element obtains a session management network element list based on the DNN, the slice, and a location of the terminal 1 in the Ethernet PDU session establishment request message. The session management network element list includes a plurality of session management network elements, and the plurality of session management network elements are all configured to provide the session management function for the target local area network. Further, the access and mobility management network element selects, from the session management network element list, the first session management network element as a session management network element accessed by the terminal 1, and initiates a session establishment request to the first session management network element, to establish a group session and/or a terminal session for the terminal 1.

It should be noted that the example shown in FIG. 5 is described by using an example in which both the first session management network element and the second session management network element are managed by the access and mobility management network element. Certainly, the first session management network element and the second session management network element may alternatively be managed by different access and mobility management network elements, for example, the first session management network element is managed by a first access and mobility management network element, and the second session management network element is managed by a second access and mobility management network element. This is not specifically limited in embodiments of this application.

Optionally, as shown in FIG. 5, the communication system 30 further includes a second user plane network element. A function of the second user plane network element is similar to that of the first user plane network element, and the second user plane network element is configured to establish, for the local area network, group sessions with the first session management network element and the second session management network element. A specific process of establishment is similar to the process of establishing the session by the first user plane network element, and details are not described herein again.

Optionally, as shown in FIG. 5, the communication system 30 further includes a network function repository network element. The network function repository network element is configured to store function information of the first session management network element and the second session management network element. The first session management network element and the second session management network element preconfigure a local area network service (which specifically includes configuring a configuration related to the local area network service, and information about a DNN (DNNs) and a slice (slices) that are supported by the session management network element). After the configuration is completed, the first session management network element and the second session management network element separately register with the network function repository network element, to register functions (including but not limited to a DNN/slice list) supported by the first session management network element and the second session management network element. After receiving the Ethernet PDU session establishment request, the access and mobility management network element requests the session management network element list from the network function repository network element based on the DNN, the slice, and location information of the terminal in the Ethernet PDU session establishment request message. The network function repository network element matches, based on the DNN, the slice, and the location information of the terminal in the message, at least the first session management network element and the second session management network element to provide a service for the local area network, and generates the session management network element list including the first session management network element and the second session management network element. Further, the network function repository network element returns the session management network element list to the access and mobility management network element.

Optionally, as shown in FIG. 5, the communication system 30 further includes a unified data management network element. The unified data management network element stores group information of the local area network. The group information of the local area network includes but is not limited to at least one of the following: a group identifier, a group attribute, a DNN, S-NSSAI, and PDUSessionTypes. After the first session management network element receives a PDU session establishment request sent by the access and mobility management network element, the first session management network element sends a user subscription data request message to the unified data management network element, to request the group information of the local area network. The unified data management network element feeds back the group information of the local area network to the first session management network element. Further, the first session management network element establishes a group session and/or a terminal session based on the group information of the local area network.

In addition, when feeding back the group information of the local area network to the first session management network element, the unified data management network element may further synchronously feed back group subscription attribute information to the first session management network element, to indicate whether a plurality of user plane network elements communicate with each other through preset interfaces. In an example, the preset interface is an N19 interface. The group subscription attribute information sent by the unified data management network element to the first session management network element carries a network Topo indication parameter to indicate whether an N6-side network supports an inter split-horizon (Split-horizon) group. If the information indicates that the N6-side network supports the inter split-horizon group, it indicates that the user plane network elements may perform inter-user plane network element communication by detouring through the N6-side network. In this case, the user plane network elements perform transmission of data of terminals connected to different user plane network elements by detouring through the network. If the group subscription attribute information indicates that the N6-side network does not support the inter split-horizon group, it indicates that the user plane network elements need to perform inter-user plane network element communication through N19 interfaces. In this case, the user plane network elements perform transmission of data of terminals connected to different user plane network elements through the N19 interfaces.

The foregoing briefly describes functions and interaction of the network elements in the system in embodiments of this application. In the manner provided in embodiments of this application, the foregoing network elements interact to establish the group session and the terminal session for the local area network group, and generate a corresponding forwarding rule for data transmission. In addition, after a session management network element is faulty, a terminal that accesses the faulty session management network element may be further migrated to a non-faulty session management network element.

After the session is established, the terminal may perform data transmission through a core network element like the user plane network element or the session management network element. In a data transmission process, the user plane network element and the session management network element may learn a corresponding forwarding rule based on a MAC address of the transmitted data, and update the forwarding rule and forward the data based on the learned forwarding rule.

Based on the communication system shown in FIG. 5, for example, a related process of a forwarding rule for unicast data includes the following steps.

The terminal 1 sends an uplink unicast packet to the first user plane network element. The uplink unicast packet carries a unicast MAC address of the terminal 1. The first user plane network element obtains the unicast MAC address from the uplink unicast packet, and synchronously records an association relationship between the unicast MAC address and the terminal session of the terminal 1 in the group session of the local area network, so that the first user plane network element can forward, based on the correspondence, packet data related to the terminal 1. The first user plane network element sends a PFCP session request message to the first session management network element. The message carries a MAC address or list discovered in the session. The first session management network element stores the unicast MAC address of the terminal 1 in the terminal session, and stores the unicast MAC address of the terminal 1 in the group session corresponding to the first session management network element. The first session management network element sends a PFCP session response message to the first user plane network element. For a group session between the first session management network element and the second user plane network element, the first session management network element generates a forwarding rule 1. The forwarding rule 1 includes a tunnel identifier 1 allocated by the first user plane network element. The first session management network element sends the forwarding rule 1 to the second user plane network element. The forwarding rule 1 is used for forwarding, by the second user plane network element, packet data of the unicast MAC of the terminal 1. For the group session between the first session management network element and the second user plane network element, the first session management network element generates a forwarding rule 2. The forwarding rule 2 includes a tunnel identifier 2 allocated by the second user plane network element. The first session management network element sends the forwarding rule 2 to the first user plane network element. The forwarding rule 2 is used for forwarding, by the first user plane network element, the packet data of the unicast MAC of the terminal 1.

A terminal 2 sends an uplink unicast packet to the second user plane network element. The uplink unicast packet carries a unicast MAC address of the terminal 2. The second user plane network element obtains the unicast MAC address from the uplink unicast packet, and synchronously records an association relationship between the unicast MAC address and a terminal session of the terminal 2 in the group session of the local area network, so that the second user plane network element can subsequently forward, based on the correspondence, packet data related to the terminal 2. The second user plane network element sends a PFCP session request message to the second session management network element. The message carries a MAC address or list discovered in the session. The second session management network element stores the unicast MAC address of the terminal 2 in the terminal session, and stores the unicast MAC address of the terminal 2 in the group session corresponding to the second session management network element. The second session management network element sends a PFCP session response message to the second user plane network element. For a group session between the second session management network element and the first user plane network element, the second session management network element generates a forwarding rule 3. The forwarding rule 3 includes a tunnel identifier 3 allocated by the second user plane network element. The second session management network element sends the forwarding rule 3 to the first user plane network element. The forwarding rule 3 is used for forwarding, by the first user plane network element, packet data of the unicast MAC of the terminal 2. For the group session between the second session management network element and the second user plane network element, the second session management network element generates a forwarding rule 4. The forwarding rule 4 includes a tunnel identifier 4 allocated by the first user plane network element. The second session management network element sends the forwarding rule 4 to the second user plane network element. The forwarding rule 4 is used for forwarding, by the second user plane network element, the packet data of the unicast MAC of the terminal 2.

Based on the communication system shown in FIG. 5, for example, a related process of a forwarding rule for multicast data includes the following steps.

After joining a multicast group of the local area network, the terminal 1 sends an uplink multicast packet to the first user plane network element. The uplink multicast packet includes a multicast MAC address of the group session. The first user plane network element obtains the multicast MAC address from the uplink multicast packet, and synchronously records an association relationship between the multicast MAC address and the terminal session of the terminal 1 in the group session of the local area network, so that the first user plane network element can subsequently forward, based on the correspondence, packet data related to the multicast MAC. The first user plane network element separately sends a PFCP session request message to the first session management network element and the second session management network element. The message carries a multicast MAC address discovered in the session. Both the first session management network element and the second session management network element store the relationship between the multicast MAC address and the terminal session of the terminal 1 in the terminal session, and store the relationship between the multicast MAC address and the terminal session of the terminal 1 in the group session corresponding to the first session management network element and the group session corresponding to the second session management network element. Both the first session management network element and the second session management network element send PFCP session response messages to the first user plane network element.

For the group session between the first session management network element and the second user plane network element, the first session management network element generates a forwarding rule 5. The forwarding rule 5 includes a tunnel identifier 5 allocated by the first user plane network element and a node identifier of the first user plane network element. The forwarding rule 5 is used for forwarding, by the second user plane network element, the packet data related to the multicast MAC address. The first session management network element sends the forwarding rule 5 to the second user plane network element. The first session management network element further generates a forwarding rule 6. The forwarding rule 6 includes a tunnel identifier 6 allocated by the second user plane network element. The forwarding rule 6 is used for forwarding, by the first user plane network element, the packet data related to the multicast MAC address. The first session management network element sends the forwarding rule 6 to the first user plane network element.

For the group session between the second session management network element and the second user plane network element, the second session management network element generates a forwarding rule 7. The forwarding rule 7 includes a tunnel identifier 7 allocated by the first user plane network element and the node identifier of the first user plane network element. The forwarding rule 7 is used for forwarding, by the second user plane network element, the packet data related to the multicast address. The second session management network element sends the forwarding rule 7 to the second user plane network element. The second session management network element further generates a forwarding rule 8. The forwarding rule 8 includes a tunnel identifier 8 allocated by the second user plane network element. The forwarding rule 8 is used for forwarding, by the first user plane network element, the packet data related to the multicast MAC address. The second session management network element sends the forwarding rule 8 to the first user plane network element.

The first session management network element and the first user plane network element, and the second session management network element and the second user plane network element refresh respective forwarding rules based on the forwarding rule 3 to the forwarding rule 8.

It should be noted that, in the unicast and multicast processes, tunnel identifiers allocated by a same user plane network element may be the same or may be different. For example, tunnel identifiers generated by a same user plane network element for a unicast AMC address and a multicast MAC address are the same or different, tunnel identifiers generated by a same user plane network element for the terminal 1 and the terminal 2 are the same or different, or tunnel identifiers generated by a same user plane network element for different types of MAC addresses of different terminals are the same or different. This is not limited in this application.

Optionally, based on the communication system shown in FIG. 5, when the first session management network element is faulty, a process of switching a session management network element includes the following steps.

After the first session management network element is faulty, the first user plane network element and the second user plane network element detect, through an N4 interface link, that the first session management network element is faulty. In this case, the first user plane network element and the second user plane network element delete the terminal session registered with the first session management network element and the group session associated with the first session management network element. The group session related to the second session management network element is retained in the first user plane network element and the second user plane network element.

When the terminal 1 needs to send uplink data, because both the first user plane network element and the second user plane network element delete the terminal session and the group session on the first session management network element, the terminal 1 cannot send the uplink data. In this case, the terminal 1 initiates a PDU session establishment request to the access and mobility management network element again. After receiving the PDU session establishment request, the access and mobility management network element selects a serviceable session management network element list from the network function repository network element. The faulty first session management network element is deleted from the currently serviceable session management network element list, and only the available second session management network element is left. The access and mobility management network element selects the second session management network element as a session management network element to be accessed by the terminal.

With reference to the foregoing process of establishing the terminal session or the group session through interaction between the terminal and the core network element, the second session management network element establishes a terminal session and a group session for the terminal 1.

When the second session management network element selects an available user plane network element list, if the selected user plane network element list establishes a group session with the second session management network element, the second session management network element does not need to establish the group session this time, and directly establishes the terminal session for the terminal. If a user plane network element that does not establish a group session with the second session management network element exists in the user plane network element list, a group session between the second session management network element and the user plane network element that does not establish a group session is established with reference to the foregoing process. In this way, the terminal session and/or the group session of the terminal 1 are/is established between the second session management network element and each user plane network element, and the terminal 1 may subsequently directly perform a session management-related function through the second session management network element.

It should be noted that FIG. 5 is merely an example in which the first user plane network element provides access to the local area network for the terminal 1 or the second user plane network element provides access to the local area network for the terminal 2. Certainly, the first user plane network element may alternatively provide access to the local area network for a plurality of terminals. For example, the first user plane network element may alternatively provide access to the local area network for a terminal 3 or a terminal 4. Alternatively, the second user plane network element may alternatively provide access to the local area network for one terminal or more than two terminals. For example, second user plane network element may alternatively provide access to the local area network for a terminal 5. This is not specifically limited in embodiments of this application.

Optionally, the communication system shown in FIG. 3 and FIG. 5 may be used in a current 5G network or another future network. This is not specifically limited in embodiments of this application.

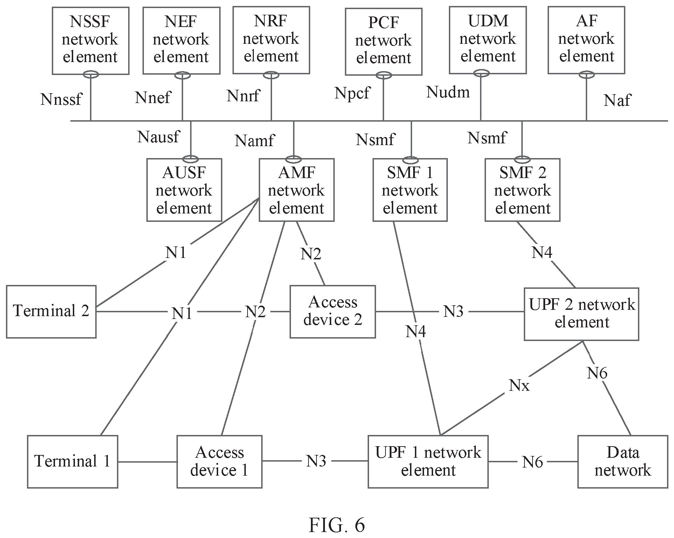

For example, as shown in FIG. 6, if the communication system shown in FIG. 3 and FIG. 5 are used in the current 5G network, a network element or an entity corresponding to the first session management network element in FIG. 3 and FIG. 5 may be an SMF 1 network element (or an SMF 1 for short) in a 5G network architecture; a network element or an entity corresponding to the second session management network element in FIG. 3 and FIG. 5 may be an SMF 2 network element (or an SMF 2 for short) in the 5G network architecture; a network element or an entity corresponding to the first user plane network element in FIG. 3 and FIG. 5 may be a UPF 1 network element (or a UPF 1 for short) in the 5G network architecture; a network element or an entity corresponding to the second user plane network element in FIG. 5 may be a UPF 2 network element (or a UPF 2 for short) in the 5G network architecture; a network element or an entity corresponding to the access and mobility management network element in FIG. 5 may be an AMF network element (or an AMF for short) in the 5G network architecture; a network element or an entity corresponding to the network function repository network element in FIG. 5 may be a network repository function (network exposure function Repository Function, NRF) network element (or an NRF for short) in the 5G network architecture; and a network element or an entity corresponding to the unified data management network element in FIG. 5 may be a UDM network element (or a UDM for short) in the 5G network architecture. The foregoing local area network may be a 5G LAN. In addition, in terms of an expression, the 5G LAN may also be referred to as a LAN, a LAN-type service (type service), a LAN-virtual network (virtual network, VN), a 5G LAN-type service, a 5G LAN-VN, a 5G LAN group (group), a LAN Group, or the like. A name of the 5G LAN is not specifically limited in this embodiment of this application.

In addition, as shown in FIG. 6, the current 5G network may further include an access device 1, an access device 2, an authentication server function (authentication server function, AUSF) network element (or an AUSF for short), a network slice selection function (network slice selection function, NSSF) network element (or an NSSF for short), a network exposure function (network exposure function, NEF) network element (or an NEF for short), a policy control function (policy control function, PCF) network element (or an PCF for short), an application function (application function, AF) network element (or an AF for short), and the like. This is not specifically limited in embodiments of this application.

As shown in FIG. 6, the terminal 1 accesses the 5G network through the access device 1, and the terminal 1 communicates with the AMF network element through a next generation (next generation, N) 1 interface (N1 for short); the terminal 2 accesses the 5G network through the access device 2, and the terminal 2 communicates with the AMF network element through N1; the access device 1 or the access device 2 communicates with the AMF network element through an N2 interface (N2 for short); the access device 1 communicates with the UPF 1 network element through an N3 interface (N3 for short); the access device 2 communicates with the UPF 2 network element through N3; the SMF 1 network element communicates with the UPF 1 network element through an N4 interface (N4 for short); the SMF 2 network element communicates with the UPF 2 network element through N4; and the UPF 1 network element communicate with the UPF 2 network element through an Nx interface (Nx for short); or the UPF 1 network element or the UPF 2 network element accesses a data network through an N6 interface (N6 for short). The Nx interface may reuse an existing N9 interface or the existing N6 interface, or may be a new defined interface. This is not limited. In addition, control plane network elements such as the AUSF network element, the AMF network element, the SMF network element, the NSSF network element, the NEF network element, the NRF network element, the PCF network element, the UDM network element, or the AF network element shown in FIG. 6 may alternatively use a service-based interface for interaction. For example, a service-based interface exhibited by the AUSF network element may be Nausf; a service-based interface exhibited by the AMF network element for external connection may be Namf; a service-based interface exhibited by the SMF network element may be Nsmf; a service-based interface exhibited by the NSSG network element may be Nnssf; a service-based interface exhibited by the NEF network element may be Nnef; a service-based interface exhibited by the NRF network element may be Nnrf; a service-based interface exhibited by the PCF network element may be Npcf; a service-based interface exhibited by the UDM network element may be Nudm; and a service-based interface exhibited by the AF network element may be Naf. For related descriptions, refer to a diagram of a 5G system architecture (5G system architecture) in the 23501 standard. Details are not described herein.

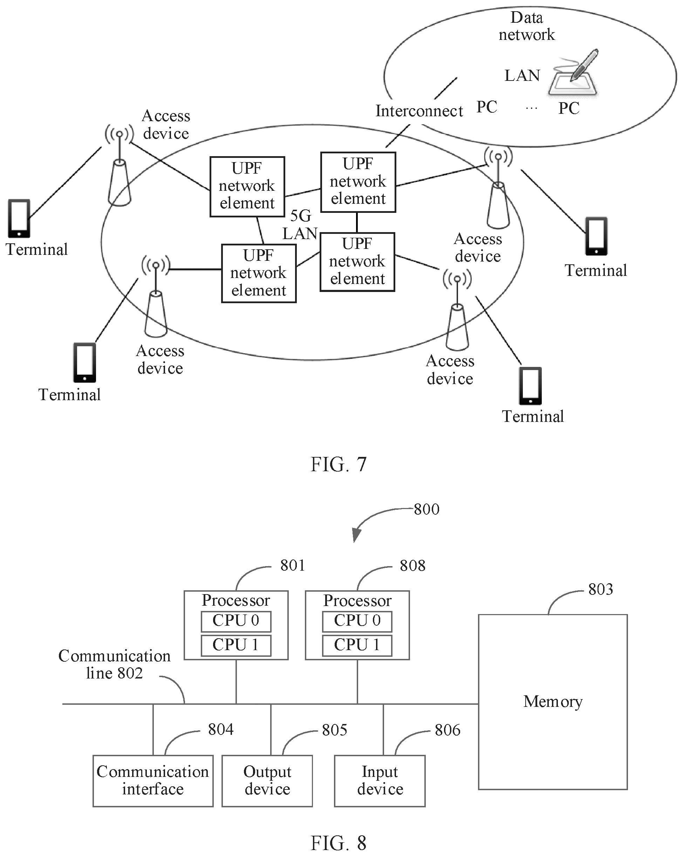

FIG. 7 is a diagram of a user plane architecture of an existing 5G LAN service. A terminal establishes a session with a UPF network element that provides the 5G LAN service, to access the UPF network element that provides the 5G LAN service. As described above, the UPF network element that provides the 5G LAN service may interconnect with an existing LAN in a data network through N6, for example, communicate with a personal computer (personal computer, PC) in the LAN. Alternatively, the UPF network element that provides the 5G LAN service may associate sessions of different terminals through a connection in the UPF network element and a connection between UPF network elements, to implement private communication. This is not specifically limited in embodiments of this application.

The terminal in this application may be user equipment (user equipment, UE) in a 5th generation (5th generation, 5G) mobile communication technology network or an evolved public land mobile network (public land mobile network, PLMN) after 5G, an access terminal, a terminal unit, a subscriber station, a terminal station, a mobile station, a remote station, a remote terminal, a user terminal (terminal equipment, TE), a mobile device, a wireless communication device, a terminal agent, a tablet computer (pad), a handheld device with a wireless communication function, a computing device or another processing device connected to a wireless modem, a vehicle-mounted device, a vehicle-mounted transceiver unit, a wearable device, or a terminal apparatus. The access terminal may be a cellular phone, a cordless phone, a session initiation protocol (session initiation protocol, SIP) phone, a wireless local loop (wireless local loop, WLL) station, personal digital assistant (personal digital assistant, PDA), a handheld device with a wireless communication function, a computing device or another processing device connected to a wireless modem, a vehicle-mounted device, an uncrewed aerial vehicle, a robot, a smart point of sale (point of sale, POS) machine, customer-premises equipment (customer-premises equipment, CPE) or a wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. Alternatively, the terminal may be a terminal having a communication function in internet of things (internet of things, IoT), for example, a terminal in V2X (for example, an internet of vehicles device), a terminal in D2D communication, or a terminal in M2M communication. The terminal may be movable or fixed.

In embodiments of this application, a form of the terminal is not limited. An apparatus configured to implement a function of the terminal may be the terminal, or may be an apparatus supports the terminal in implementing the function, for example, a chip system. The apparatus may be installed in the terminal or used in cooperation with the terminal. In embodiments of this application, the chip system may include a chip, or may include a chip and another discrete component.

The access device (including an access device 1 or an access device 2) in this application may be a device configured to communicate with the terminal, for example, may include an evolved NodeB (NodeB, eNB, or e-NodeB, evolved NodeB) in a long term evolution (long term evolution, LTE) system or an LTE-advanced (LTE-advanced, LTE-A) system, for example, a conventional macro base station eNB and a micro base station eNB in a heterogeneous network scenario. Alternatively, the access device may include a next generation NodeB (next generation NodeB, gNB) in an NR system. Alternatively, the access device may include a transmission reception point (transmission reception point, TRP), a home base station (for example, a home evolved NodeB or a home NodeB, HNB), a baseband unit (baseband unit, BBU), a baseband pool (BBU pool), a wireless fidelity (wireless fidelity, Wi-Fi) access point (access point, AP), or the like. Alternatively, the access device may include a base station in a non-terrestrial network (non-terrestrial network, NTN), that is, may be deployed on an airplane platform or a satellite. In the NTN, the access device may be used as a layer 1 (L1) relay (relay), may be used as a base station, or may be used as an integrated access and backhaul (integrated access and backhaul, IAB) node. Alternatively, the access device may be a device that is in IoT and that implements functions of a base station, for example, a device that is in uncrewed aerial vehicle communication, V2X, D2D, or machine-to-machine (machine-to-machine, M2M) and that implements the functions of the base station.

In some possible scenarios, the access device may alternatively be a module or unit that can implement some functions of a base station. For example, the access device may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, the access device may be an access device or a module of the access device in an open radio access network (open RAN, ORAN) system. In the ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP and the CU-UP), the DU, and the RU in this application may be implemented by using a software module, a hardware module, or a combination of a software module and a hardware module.

Optionally, the base station in embodiments of this application may include various forms of base stations, for example, a macro base station, a micro base station (or referred to as a small cell), a relay station, an access point, a home base station, a TRP, a transmitting point (transmitting point, TP), or a mobile switching center. This is not specifically limited in embodiments of this application.

A form of the access device is not limited in embodiments of this application. An apparatus for implementing a function of the access device may be an access device, or may be an apparatus, for example, a chip system, that supports an access device in implementing the function. The apparatus may be mounted in the access device or used with the access device.

Optionally, the first session management network element, the second session management network element, the first user plane network element, or the second user plane network element in FIG. 5 in embodiments of this application may be implemented by one device, may be jointly implemented by a plurality of devices, or may be implemented by one functional module in one device. This is not specifically limited in embodiments of this application. It may be understood that the foregoing functions may be network elements in a hardware device, may be software functions running on dedicated hardware, or may be virtualization functions instantiated on a platform (for example, a cloud platform).

For example, the first session management network element, the second session management network element, the first user plane network element, the second user plane network element, or the access and mobility management network element in FIG. 5 in this embodiment of this application may be implemented by a communication apparatus in FIG. 8. FIG. 8 is a diagram of a hardware structure of a communication apparatus according to an embodiment of this application. The communication apparatus 800 includes a processor 801, a communication line 802, a memory 803, and at least one communication interface (where descriptions are provided in FIG. 8 merely by using an example in which a communication interface 804 is included).

The processor 801 may be a general-purpose central processing unit (central processing unit, CPU), a microprocessor, an application-specific integrated circuit (application-specific integrated circuit, ASIC), or one or more integrated circuits configured to control program execution of solutions of this application.

The communication line 802 may include a path on which information is transferred between the foregoing components.

The communication interface 804, which uses any type of apparatus like a transceiver, is configured to communicate with another device or a communication network, like an Ethernet, a RAN, and a wireless local area network (wireless local area network, WLAN).

The memory 803 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disk storage (including a compact disc, a laser disc, an optical disc, a digital versatile disc, a blue-ray disc, and the like), a magnetic disk storage medium or another magnetic storage device, or any other medium that can be configured to carry or store expected program code in an instruction form or a data structure form and that can be accessed by a computer, but is not limited thereto. The memory may stand alone and is connected to the processor through the communication line 802. The memory may alternatively be integrated with the processor.

The memory 803 is configured to store computer-executable instructions for executing the solution of this application, and the processor 801 controls execution of the computer-executable instructions. The processor 801 is configured to execute the computer-executable instructions stored in the memory 803, to implement the communication method provided in the following embodiments of this application.

Optionally, the computer-executable instructions in embodiments of this application may also be referred to as application program code. This is not specifically limited in embodiments of this application.

During specific implementation, in an embodiment, the processor 801 may include one or more CPUs, for example, a CPU 0 and a CPU 1 shown in FIG. 8.

In specific implementation, in one embodiment, the communication apparatus 800 may include a plurality of processors, for example, the processor 801 and a processor 808 in FIG. 8. Each of the processors may be a single-core (single-CPU) processor, or may be a multi-core (multi-CPU) processor. The processor herein may be one or more devices, circuits, and/or processing cores configured to process data (for example, computer program instructions).

In specific implementation, in an embodiment, the communication apparatus 800 may further include an output device 805 and an input device 806. The output device 805 communicates with the processor 801, and may display information in a plurality of manners. For example, the output device 805 may be a liquid crystal display (liquid crystal display, LCD), a light emitting diode (light emitting diode, LED) display device, a cathode ray tube (cathode ray tube, CRT) display device, or a projector (projector). The input device 806 communicates with the processor 801, and may receive an input by a user in a plurality of manners. For example, the input device 806 may be a mouse, a keyboard, a touchscreen device, or a sensor device.

The foregoing communication apparatus 800 may be a general-purpose device or a dedicated device. During specific implementation, the communication apparatus 800 may be a desktop computer, a portable computer, a network server, a personal digital assistant (personal digital assistant, PDA), a mobile phone, a tablet computer, a wireless terminal, an embedded device, or a device having a structure similar to that in FIG. 8. A type of the communication apparatus 800 is not limited in embodiments of this application.

The following specifically describes the communication method provided in embodiments of this application with reference to FIG. 3 to FIG. 8.

It should be noted that names of messages between network elements, names of parameters in the messages, or the like in the following embodiments of this application are merely examples, and there may be other names in a specific implementation. This is not specifically limited in embodiments of this application.

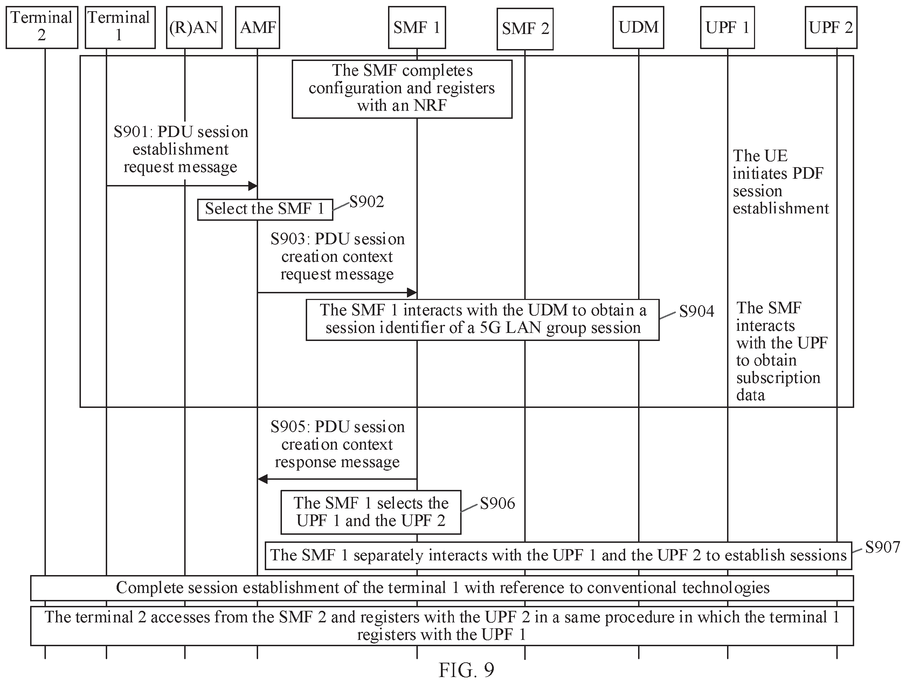

For example, the communication system shown in FIG. 3 or FIG. 5 is used in the 5G network shown in FIG. 6, the first session management network element is an SMF 1, the second session management network element is an SMF 2, and the first user plane network element is a UPF 1. It is assumed that the SMF 1 and the SMF 2 separately provide a session management service for the 5G LAN group. FIG. 9 shows a communication method according to an embodiment of this application. The communication method includes the following steps.

S901: A terminal 1 sends a PDU session establishment request message to an AMF. Correspondingly, the AMF receives the PDU session establishment request message from the terminal.

For a specific implementation of S901, refer to S201. Details are not described in this application again.

S902: The AMF selects an SMF 1.

In a possible implementation, the AMF selects, based on a DNN, a slice, and location information (for example, a TAI) in the PDU session establishment request message, an SMF that can provide a service for a terminal in the 5G LAN group.

Different from the conventional technologies shown in FIG. 2A and FIG. 2B, in S902, an SMF list received by the AMF includes a plurality of SMFs, and the AMF selects an SMF for the terminal in a manner like load balancing, so that the terminal accesses the SMF.

In a specific implementation, the SMF 1 and an SMF 2 separately configure a 5G LAN group service, for example, configure information about a DNN and a slice (slices) Slice (Slices) that are supported by an SMF and that are related to the 5G LAN group. After the SMF 1 and the SMF 2 configure configuration information of the 5G LAN group, the SMF 1 and the SMF 2 separately initiate registration with an NRF, to register a DNN, a slice list, and serviceable location information supported by the SMF 1 and the SMF 2 with the NRF.

After receiving the PDU session establishment request message, the AMF sends an SMF list request message to the NRF. The request message carries a DNN, a slice, and location information (for example, a TAI) of the 5G LAN group of the terminal. After receiving the SMF list request message, the NRF selects, based on the DNN, the slice, and the location information (for example, the TAI) in the request message, and the DNN, the slice list, and the serviceable location information that are supported by a plurality of pre-registered SMFs, a plurality of SMFs (including the SMF 1 and the SMF 2) that can provide a service for the 5G LAN group of the terminal, and adds the plurality of SMFs to the SMF list and returns the SMF list to the AMF. The AMF selects an SMF from the SMF list returned by the NRF for the terminal to access.

It should be noted that in this embodiment of this application, an example in which only two SMFs (the SMF 1 and the SMF 2) support the 5G LAN group is used for description. In specific implementation, a plurality of SMFs may support the 5G LAN group. This is not limited in this application.

S903: The AMF sends a PDU session creation context request message to the SMF 1. Correspondingly, the SMF 1 receives the PDU session creation context request message from the AMF.

For a specific implementation of S903, refer to S203. Details are not described in this application again.

S904: The SMF 1 interacts with a UDM to obtain a session identifier of a 5G LAN group session.

For some implementations in S904, refer to S204. Details are not described herein again.

In addition, in S904, the UDM may further indicate a transmission manner between different UPFs by using information.

For example, when an Nudm_SDM_GetSharedData Response message sent by the UDM to the SMF 1 indicates a group subscription message of the 5G LAN group, in addition to parameters such as a DNN, a slice, and a PDU session type corresponding to the 5G LAN group, the message further includes a network Topo indication parameter, and the parameter indicates whether an N6-side network supports an inter split-horizon (Split-horizon) groups. If this parameter indicates that the N6-side network supports the inter split-horizon group (or a plurality of pairs of switches are deployed on the N6-side network), it indicates that different UPFs may implement inter-UPF communication by detouring through the N6-side network. In this case, the different UPFs perform transmission of data of terminals connected to the different UPFs by detouring through the network. If this parameter indicates that the N6-side network does not support the inter split-horizon group, it indicates that different UPFs need to implement inter-UPF communication through N19 interfaces. In this case, the different UPFs perform transmission of data of terminals connected to the different UPFs through the N19 interfaces.

Based on the indication of network Topo indication, when generating a UPF forwarding rule, the SMF may generate different forwarding rules depending on whether the UPF needs to implement inter-UPF transmission through the N19 interface, so that the UPF can forward data based on a corresponding forwarding rule. In this way, the UPF can select a corresponding forwarding mode to forward a packet in different networking modes (for example, a networking mode that supports the inter split-horizon group and a networking mode that does not support the inter split-horizon group), to avoid network performance consumption caused by sending a same packet for a plurality of times.

It should be noted that the foregoing descriptions are provided by using an example in which the UDM indicates the group subscription message to the SMF 1 by using an indication message. In specific implementation, the group subscription message that carries the indication information indicating a transmission manner between different UPFs may be further preconfigured in the SMF 1, or may be preconfigured in the UPF 1 selected by the SMF. The SMF 1 may obtain the group subscription message from the SMF 1 or the UPF 1. Details are not described in this application.

In an example, a forwarding rule generated by the SMF 1 for the UPF 1 is denoted as a first forwarding rule, and the SMF 1 sends the first forwarding rule based on the first group session establishment request in S901. The first forwarding rule represents a rule for forwarding data by the UPF 1.

In an example, when the N6-side network supports the inter split-horizon group, the first forwarding rule includes at least one of the following: a first downlink broadcast, unknown-unicast, multicast (Broadcast, Unknown-unicast, Multicast, BUM) forwarding rule; a first uplink BUM forwarding rule; and an inter-user plane network element BUM forwarding rule.

The first downlink BUM forwarding rule is: A target UPF forwards a downlink BUM data packet to each terminal that is in a local area network and that accesses the target UPF, and does not forward the downlink BUM data packet to the N19 interface, where the target UPF is a UPF that receives the first forwarding rule. Optionally, the first downlink BUM forwarding rule includes a PDR and a FAR that are added to a group session, a type of the PDR and the FAR is any to any, and the PDR and the FAR are directed from an N6 side to VNinternal (that is, from the N6-side network to the UPF).

The first uplink BUM forwarding rule is: The target UPF forwards an uplink BUM data packet to the N19 interface and an N6 interface, and sends the uplink BUM data packet to a third terminal, where the third terminal is a terminal, other than a terminal that sends the uplink BUM data packet, in terminals that are in the local area network and that access the target UPF. Optionally, the first uplink BUM forwarding rule includes two pairs of PDRs and FARs that are added to the group session. Types of the two pairs of PDRs and FARs are all any to any. One PDR-FAR pair is directed from VNinternal to the N6 side, and the other PDR-FAR pair is directed from VNinternal to an N19 side. Priorities of the two pairs of PDRs and FARs are the same. The UPF needs to perform matching on the two pairs of PDRs and FARs during data forwarding, and forwards data based on the two pairs of PDRs and FARs.

The inter-UPF BUM forwarding rule is: The target UPF forwards an inter-UPF BUM to each terminal that is in the local area network and that accesses the target UPF. Optionally, the inter-UPF BUM forwarding rule includes a PDR and a FAR that are added to the group session, a type of the PDR and the FAR is any to any, and the PDR and the FAR are directed from N19 Core to VNinternal.

In still another example, when the N6-side network supports the inter split-horizon group, the first forwarding rule includes at least one of the following: a second downlink BUM forwarding rule and a second uplink BUM forwarding rule.

The second downlink BUM forwarding rule is: A target UPF forwards a downlink BUM data packet to each terminal that is in a local area network and that accesses the target UPF, where the target UPF is a UPF that receives the first forwarding rule.

The second uplink BUM forwarding rule is: The target UPF forwards an uplink BUM data packet to an N6 interface, and sends the uplink BUM data packet to a fourth terminal, where the fourth terminal is a terminal, other than a terminal that sends the uplink BUM data packet, in terminals that are in the local area network and that access the target UPF.

S905: The SMF 1 sends a PDU session creation context response message to the AMF. Correspondingly, the AMF receives the PDU session creation context response message from the SMF 1.

For a specific implementation of S905, refer to S205. Details are not described in this application again.

S906: The SMF 1 selects the UPF 1 and a UPF 2.

In a possible implementation, the SMF 1 selects, based on a DNN, a slice, and a PDU session type (Ethernet), the UPF 1 that supports a 5G LAN.

It should be noted that in this embodiment of this application, after selecting a UPF list for the terminal, the SMF 1 first determines whether the terminal is a terminal that first performs access in the 5G LAN group to which the terminal belongs. If the terminal is a terminal that first performs access, the SMF 1 triggers establishment of a group session with each UPF in the UPF list, for example, sends a corresponding group session establishment request message to each UPF in the UPF list.

If a UPF in the UPF list is out of service (that is, the UPF no longer provides a service for the 5G LAN group), the SMF deletes a group session of the out-of-service UPF based on an operational maintenance (Operational Maintenance, OM) instruction.

If a newly added UPF exists in the UPF list, the SMF sends a group session establishment request to the newly added UPF based on the OM instruction, and establishes a group session of the 5G LAN group on the newly added UPF.

S907: The SMF 1 separately interacts with the UPF 1 and the UPF 2 to establish sessions.

For a part of a process in which the SMF 1 interacts with the UPF 1 to establish the session, refer to the manner (including S207a to S207d) recorded in S207. Details are not described herein again.

In addition to the process described in S207, in S907, a first group session establishment request message sent by the SMF 1 to the UPF 1 includes two pairs of PDRs and FARs used for uplink data forwarding between the UPF and a data network. Types of the two pairs of PDRs and FARs are all any to any. One of the two pairs of PDRs and FARs is an uplink forwarding rule, and is directed from Vninternal to core. The other is a downlink forwarding rule, and is directed from core to Vninternal.

In addition, when the N6-side network does not support the inter split-horizon group, different UPFs need to communicate with each other through the N19 interfaces. Therefore, the SMF 1 further needs to establish, for the UPF 1, a tunnel corresponding to the N19 interface and generate and broadcast a PDR and a FAR. A specific process is as follows.

After receiving the group session establishment request from the SMF 1, the UPF 1 and the UPF 2 respectively allocate tunnel identifiers (for example, N19 F-TEIDs) to established group sessions. The tunnel identifiers allocated by the UPF 1 and the UPF 2 to the group sessions are identifiers of tunnels used for inter-UPF communication. Optionally, the tunnel identifier further includes a tunnel address. For example, the tunnel identifier allocated by the UPF 1 to the group session established by the UPF 1 is a UPF 1 N19 F-TEID, and the tunnel identifier allocated by the UPF 2 to the group session established by the UPF 2 is a UPF 2 N19 F-TEID.

The UPF 1 and the UPF 2 include the allocated tunnel identifiers to group session response messages and send the group session response messages to the SMF 1, so that the SMF 1 can generate the corresponding PDR and FAR based on the tunnel identifiers, to indicate inter-UPF data forwarding.

In this embodiment of this application, the SMF 1 generates a second forwarding rule based on the UPF 2 N19 F-TEID, and the SMF 1 generates a third forwarding rule based on the UPF 1 N19 F-TEID.

The SMF 1 sends a first session modification request to the UPF 1, to indicate the second forwarding rule. The SMF 1 sends a third session modification request to the UPF 2, to indicate the third forwarding rule.

It should be noted that after S907, the foregoing network elements continue to establish sessions with reference to steps S208 to S213 in FIG. 2A and FIG. 2B. A specific process is not described herein again. In addition, in FIG. 9, only an example in which the SMF 1 establishes a terminal session and/or the group session is used for description. In an actual process, a plurality of SMFs may separately perform the process in FIG. 9 to establish terminal sessions and/or group sessions, so that the plurality of SMFs separately manage the 5G LAN group. For example, with reference to the SMF 1, the SMF 2 performs the method recorded in FIG. 9 to establish a session for the 5G LAN group, so that both the SMF 1 and the SMF 2 can perform session management on the 5G LAN group.

The foregoing describes in detail the session establishment process in the communication method provided in embodiments of this application. After session establishment is performed, different SMFs may generate corresponding forwarding rules based on a MAC address sent by the terminal, and indicate the generated forwarding rules to the UPF. The UPF performs update based on the received forwarding rules. The forwarding rule includes a unicast forwarding rule and a multicast forwarding rule, and the rules are described in detail below.

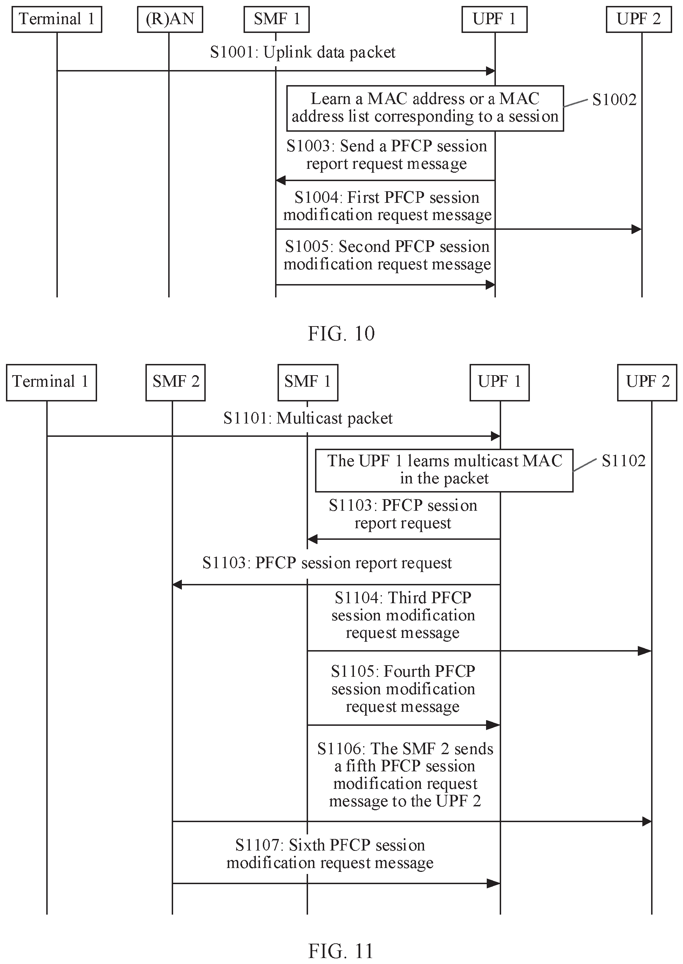

As shown in FIG. 10, a process of generating and sending the unicast forwarding rule includes the following S1001 to S1005.

S1001: A terminal 1 sends an uplink data packet to a UPF 1. Correspondingly, the UPF 1 receives the uplink data packet from the terminal.

The uplink data packet includes a unicast MAC address.

In a possible implementation, the uplink data packet may be generated by the terminal, or may be sent to the terminal after being generated by a device (for example, an industrial device) connected to the terminal. This is not limited in this application.

When the uplink data packet is generated by the terminal, the unicast MAC address in the uplink data packet may be a unicast MAC address of the terminal. When the uplink data packet is generated and sent to the terminal by the device (for example, the industrial device) of the terminal, the unicast MAC address in the uplink data packet may be a unicast MAC address of the device of the terminal. This is not limited in this application.

S1002: The UPF 1 learns a MAC address or a MAC address list corresponding to a session.

In a possible implementation, the UPF 1 synchronously records a relationship between the MAC (MACs) and a terminal session in a group session, for subsequent data packet forwarding in the UPF 1.

S1003: The UPF 1 sends a PFCP session report request message for the terminal session to the SMF 1. Correspondingly, the SMF 1 receives the PFCP session report request message from the UPF 1.

The PFCP session report request message carries the MAC address (or a MAC list) discovered in the session.

The SMF 1 stores the MAC address in the terminal session, and includes the MAC address in a group session corresponding to the SMF 1. The SMF 1 sends the PFCP session report request message to the UPF 1.

In an example, the PFCP session report request message is PFCP Session Report Request.

S1004: The SMF 1 sends a first PFCP session modification request message to a UPF 2. Correspondingly, the UPF 2 receives the first PFCP session modification request message from the SMF 1.

The first PFCP session modification request message is a session modification request generated for a session between the SMF 1 and the UPF 2, and is used to modify a forwarding rule for a unicast MAC address between the SMF 1 and the UPF 2.

In other words, the SMF 1 generates a corresponding PDR and FAR based on learned unicast MAC. The FAR carries an N19 F-TEID allocated by the UPF 1, and the PDR and the FAR are used for forwarding a subsequent unicast MAC packet. The SMF 1 generates the first PFCP session modification request message based on the PDR and the FAR, and sends the first PFCP session modification request message to the UPF 2.

In an example, the first PFCP session modification request is PFCP Session Modify Request.

S1005: The SMF 1 sends a second PFCP session modification request message to the UPF 1. Correspondingly, the UPF 1 receives the second PFCP session modification request message from the SMF 1.

The second PFCP session modification request message is a session modification request generated for a session between the SMF 1 and the UPF 1, and is used to modify a forwarding rule for a unicast MAC address between the SMF 1 and the UPF 1.

In other words, the SMF 1 generates a corresponding PDR and FAR based on learned unicast MAC. The FAR carries an N19 F-TEID allocated by the UPF 2, and the PDR and the FAR are used for forwarding a subsequent unicast MAC packet. The SMF 1 generates the second PFCP session modification request message based on the PDR and the FAR, and sends the second PFCP session modification request message to the UPF 1.

In an example, the second PFCP session modification request is PFCP Session Modify Request.

The foregoing describes a related forwarding mechanism in the UPF and a related N19 data transmission forwarding mechanism after the UPF learns the unicast MAC.

As shown in FIG. 11, a process of generating and sending the multicast forwarding rule includes the following steps S1101 to S1007:

S1101: After joining a multicast group, a terminal sends a multicast packet to a UPF 1.

S1102: The UPF 1 learns multicast MAC in the packet.

The UPF synchronously records a relationship between the multicast MAC and a terminal session in a group session, for subsequent data packet forwarding in the UPF 1.

S1103: The UPF 1 separately sends a PFCP session report request to an SMF 1 and an SMF 2.

The message carries a multicast MAC (MACs) address discovered in the session.

The SMF 1 and the SMF 2 store the relationship between the multicast MAC and the terminal session in the group session, and the SMF 1 and the SMF 2 send a PFCP Session Report Response message to UPF 1.

In an example, the PFCP session report request is PFCP Session Report Request.

S1104: The SMF 1 sends a third PFCP session modification request message to the UPF 2. Correspondingly, the UPF 2 receives the third PFCP session modification request message from the SMF 1.

The third PFCP session modification request message is a session modification request generated for a session between the SMF 1 and the UPF 2, and is used to modify a forwarding rule for a multicast MAC address between the SMF 1 and the UPF 2.

In other words, the SMF 1 generates a corresponding PDR and FAR based on learned multicast MAC. The FAR carries an N19 F-TEID allocated by the UPF 1 and/or a node id of the UPF 1, and the PDR and the FAR are used for forwarding a subsequent multicast MAC packet. The SMF 1 generates the third PFCP session modification request message based on the PDR and the FAR, and sends the third PFCP session modification request message to the UPF 2.

In an example, the third PFCP session modification request is PFCP Session Modify Request.

S1105: The SMF 1 sends a fourth PFCP session modification request message to the UPF 1. Correspondingly, the UPF 1 receives the fourth PFCP session modification request message from the SMF 1.

The fourth PFCP session modification request message is a session modification request generated for a session between the SMF 1 and the UPF 1, and is used to modify a forwarding rule for a multicast MAC address between the SMF 1 and the UPF 1.

In other words, the SMF 1 generates a corresponding PDR and FAR based on learned multicast MAC. The PDR and the FAR carry an N19 F-TEID allocated by the UPF 2 and/or a node id of the UPF 2, and the PDR and the FAR are used for forwarding a subsequent multicast MAC packet. The SMF 1 generates the fourth PFCP session modification request message based on the PDR and the FAR, and sends the fourth PFCP session modification request message to the UPF 1.

In an example, the fourth PFCP session modification request is PFCP Session Modify Request.

S1106: The SMF 2 sends a fifth PFCP session modification request message to the UPF 2. Correspondingly, the UPF 2 receives the fifth PFCP session modification request message from the SMF 2.

The fifth PFCP session modification request message is a session modification request generated for a session between the SMF 2 and the UPF 2, and is used to modify a forwarding rule for a multicast MAC address between the SMF 2 and the UPF 2.

In other words, the SMF 2 generates a corresponding PDR and FAR based on learned multicast MAC. The FAR carries the N19 F-TEID allocated by the UPF 1 and/or the node id of the UPF 1, and the PDR and the FAR are used for forwarding a subsequent multicast MAC packet. The SMF 2 generates the fifth PFCP session modification request message based on the PDR and the FAR, and sends the fifth PFCP session modification request message to the UPF 2.

In an example, the fifth PFCP session modification request is PFCP Session Modify Request.

S1107: The SMF 2 sends a sixth PFCP session modification request message to the UPF 1. Correspondingly, the UPF 1 receives the sixth PFCP session modification request message from the SMF 2.

The sixth PFCP session modification request message is a session modification request generated for a session between the SMF 2 and the UPF 1, and is used to modify a forwarding rule for a multicast MAC address between the SMF 2 and the UPF 1.

In other words, the SMF 2 generates a corresponding PDR and FAR based on learned multicast MAC. The FAR carries the N19 F-TEID allocated by the UPF 2 and/or the node id of the UPF 2, and the PDR and the FAR are used for forwarding a subsequent multicast MAC packet. The SMF 2 generates the sixth PFCP session modification request message based on the PDR and the FAR, and sends the sixth PFCP session modification request message to the UPF 1.

In an example, the sixth PFCP session modification request is PFCP Session Modify Request.

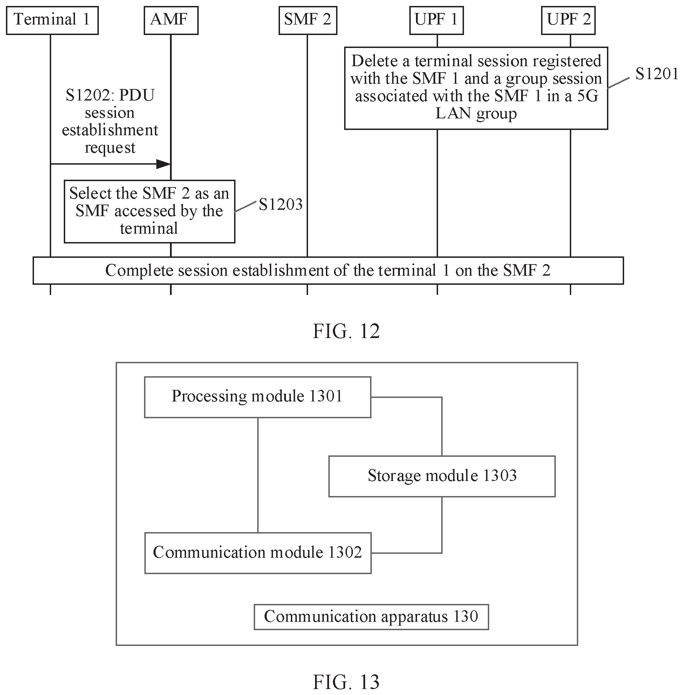

The foregoing describes in detail the process of generating and sending the unicast forwarding rule and the process of generating and sending the multicast forwarding rule in the communication method provided in embodiments of this application. In embodiments of this application, when an SMF is faulty, a terminal in the SMF may access another SMF serving a 5G LAN group, to ensure normal working of the 5G LAN group. An example in which an SMF 1 is faulty is used. As shown in FIG. 12, an SMF failover process may be specifically implemented through the following S1201 to S1203.

S1201: A UPF 1 and a UPF 2 delete a terminal session registered with an SMF 1 and a group session associated with the SMF 1 in a 5G LAN group.

In other words, the UPF 1 and the UPF 2 detect, through an N4 interface link, that the SMF 1 is faulty, and the SMF 1 cannot normally provide a service for the 5G LAN group. In this case, the UPF 1 and the UPF 2 delete the terminal session registered with the SMF 1 and the group session associated with the SMF 1 in the 5G LAN group.

It should be noted that a terminal session registered with an SMF 2 and a group session associated with the SMF 2 in the 5G LAN group are retained in the UPF 1 and the UPF 2.

S1202: A terminal initiates a PDU session establishment request to an AMF when detecting that uplink data cannot be transmitted.

For a process in which the terminal initiates the PDU session establishment request to the AMF, refer to S201 in FIG. 2A and FIG. 2B. Details are not described herein again.

S1203: The AMF selects the SMF 2 as an SMF accessed by the terminal.

A process in which the AMF selects the SMF 2 is similar to the process in which the AMF selects the SMF 1 in S902 in FIG. 9. A difference lies in that in S1202, the SMF 1 in an SMF list requested by the AMF from an NRF is unavailable, and the AMF selects the SMF 2 from available SMFs in the SMF list as an SMF to be re-accessed by the terminal.

Then, the network elements may continue to establish a session with reference to steps S903 to S907 in FIG. 9 and steps S208 to S213 in FIG. 2A and FIG. 2B. Details are not described herein again.

It should be noted that, in a session establishment process, the SMF 2 determines whether all UPFs in a UPF list establish group sessions with the SMF 2. If the SMF 2 determines that each UPF in the UPF list establishes a group session with the SMF 2, only a terminal session is established this time. If a UPF that does not establish a group session with the SMF 2 exists in the UPF list, the SMF 2 establishes, with reference to the manner recorded in FIG. 9, a group session with the UPF that does not establish a group session. A specific process is not described again.

The foregoing describes the solutions provided in embodiments of this application mainly from a perspective of interaction between network elements. Correspondingly, an embodiment of this application further provides a communication apparatus, and the communication apparatus is configured to implement the foregoing various methods. The communication apparatus may be the first user plane network element in the foregoing method embodiments, or an apparatus including the first user plane network element, or a component that may be used for the first user plane network element. Alternatively, the communication apparatus may be the access and mobility management network element in the foregoing method embodiments, or an apparatus including the access and mobility management network element, or a component that may be used for the access and mobility management network element. It may be understood that, to implement the foregoing functions, the communication apparatus includes a corresponding hardware structure and/or software module for performing the functions. A person skilled in the art should easily be aware that, with reference to units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation exceeds the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be understood that division into modules in embodiments of this application is an example, and is merely logical function division. During actual implementation, there may be another division manner.

For example, FIG. 13 is a diagram of a structure of a communication apparatus 130, including a processing module 1301 and a communication module 1302, and optionally, further including a storage module 1303. The storage module 1303 is configured to store program code and data of the communication apparatus 130.

For example, the communication apparatus 130 may be the first user plane network element in the foregoing method embodiments, or an apparatus including the first user plane network element, or a component that may be used for the first user plane network element.

The communication module 1302 is configured to receive a first session establishment request message from a first session management network element, and receive a second session establishment request message from a second session management network element, where both the first session management network element and the second session management network element are configured to provide a session management function for a target local area network; the first session establishment request message is used to request to establish a first group session between the first session management network element and the first user plane network element, and the second group session establishment request message is used to request to establish a second group session between the second session management network element and the first user plane network element; and both the first group session and the second group session are group sessions of the target local area network.

The processing module 1301 is configured to: establish the first group session based on the first session establishment request message; and establish the second group session based on the second session establishment request message.

In a possible implementation, both the first session management network element and the second session management network element are session management network elements in a first session management network element list; and a plurality of session management network elements in the first session management network element list are all configured to provide the session management function for the target local area network.

In a possible implementation, the second session establishment request is a group session establishment request message generated by the second session management network element after a first terminal is disconnected from the first session management network element and re-accesses the second session management network element; or the second group session establishment request is a group session establishment request message generated by the second session management network element after a second terminal accesses the second session management network element, where both the first terminal and the second terminal are terminals in the target local area network.

In a possible implementation, the first group session establishment request message includes at least one of the following: an identifier of the target local area network and a first forwarding rule, and the first forwarding rule represents a rule for forwarding data by the first user plane network element.

In a possible implementation, the first forwarding rule includes at least one of the following: a first downlink BUM forwarding rule, a first uplink BUM forwarding rule, and an inter-user plane network element BUM forwarding rule, where the first downlink BUM forwarding rule is: A target user plane network element forwards a downlink BUM data packet to each terminal that is in the local area network and that accesses the target user plane network element, and does not forward the downlink BUM data packet to an N19 interface, where the target user plane network element is a user plane network element that receives the first forwarding rule; the first uplink BUM forwarding rule is: The target user plane network element forwards an uplink BUM data packet to the N19 interface and an N6 interface, and sends the uplink BUM data packet to a third terminal, where the third terminal is a terminal, other than a terminal that sends the uplink BUM data packet, in terminals that are in the local area network and that access the target user plane network element; and the inter-user plane network element BUM forwarding rule is: The target user plane network element forwards inter-user plane network element BUM to each terminal that is in the local area network and that accesses the target user plane network element.

In a possible implementation, the first forwarding rule includes at least one of the following: a second downlink BUM forwarding rule and a second uplink BUM forwarding rule, where the second downlink BUM forwarding rule is: A target user plane network element forwards a downlink BUM data packet to each terminal that is in the local area network and that accesses the target user plane network element, where the target user plane network element is a user plane network element that receives the first forwarding rule; and the second uplink BUM forwarding rule is: The target user plane network element forwards an uplink BUM data packet to an N6 interface, and sends the uplink BUM data packet to a fourth terminal, where the fourth terminal is a terminal, other than a terminal that sends the uplink BUM data packet, in terminals that are in the local area network and that access the target user plane network element.

In a possible implementation, the communication module 1302 is further configured to send a first response message to the first session management network element, where the first response message indicates that the first user plane network element has established the first group session, and the first response message includes at least one of the following: a first tunnel identifier allocated by the first user plane network element to the first group session and a node identifier of the first user plane network element; and the communication module 1302 is further configured to send a second response message to the second session management network element, where the second response message indicates that the first user plane network element has established the second group session, and the second response message includes at least one of the following: a second tunnel identifier allocated by the first user plane network element to the second group session and the node identifier of the first user plane network element.

In a possible implementation, when a plurality of user plane network elements communicate with each other through preset interfaces, the first tunnel identifier and the second tunnel identifier are tunnel identifiers associated with the preset interfaces, and the plurality of user plane network elements include the first user plane network element.

In a possible implementation, the processing module 1301 is further configured to: determine group subscription attribute information of the target local area network; and determine, based on the group subscription attribute information, that the plurality of user plane network elements communicate with each other through the preset interfaces.

In a possible implementation, a manner of determining the group subscription attribute information of the target local area network includes at least one of the following: obtaining the group attribute subscription information preconfigured in the first user plane network element; and/or receiving the group attribute subscription information from the first session management network element, where the group attribute subscription information is preconfigured in the first session management network element, and/or the group attribute subscription information is obtained by the first session management network element from a unified data management network element.

In a possible implementation, the communication module 1302 is further configured to receive a first session modification request message from the first session management network element or the second session management network element, where the first session modification request message carries a second forwarding rule, and the second forwarding rule represents a forwarding rule for broadcasting data by the first user plane network element.

In a possible implementation, the second forwarding rule further includes a third tunnel identifier allocated by a second user plane network element to the target local area network and a node identifier of the second user plane network element; and the second user plane network element is a user plane network element configured to provide a user plane function for the target local area network.

In a possible implementation, the communication module 1302 is further configured to receive a second session modification request message from the first session management network element, where the second session modification request message carries a third forwarding rule, and the third forwarding rule represents a forwarding rule for forwarding, by the first user plane network element, data whose destination address is a first media access control MAC address; the processing module 1301 is further configured to establish a first correspondence between the first MAC address and a first terminal session, where the first terminal session is a session of a terminal that reports the first MAC address; and the processing module 1301 is further configured to record the first correspondence in the group session of the target local area network, where the first correspondence is used for forwarding, by the first user plane network element by using the first terminal session, a data packet whose destination address is the first MAC address.

In a possible implementation, the first MAC address is a unicast MAC address of a fourth terminal, and the fourth terminal is a terminal that accesses the first session management network element.

In a possible implementation, the communication module 1302 is further configured to receive uplink unicast packet data from the fourth terminal, where the uplink unicast packet data includes the unicast MAC address of the fourth terminal. The communication module 1302 is further configured to send the unicast MAC address of the fourth terminal to the first session management network element.

In a possible implementation, the first MAC address is a multicast MAC address of the first group session.

In a possible implementation, the communication module 1302 is further configured to receive first multicast packet data from a fifth terminal, where the first multicast packet data includes the multicast MAC address of the first group session. The communication module 1302 is further configured to send the multicast MAC address of the first group session to the first session management network element and the second session management network element.

In a possible implementation, the communication module 1302 is further configured to receive a third session modification request message from the second session management network element, where the third session modification request message carries a fourth forwarding rule, and the fourth forwarding rule represents a forwarding rule for forwarding, by the first user plane network element, data whose destination address is a second MAC address. The communication module 1302 is further configured to send a third session modification response message to the second session management network element.

In a possible implementation, the second MAC address is a unicast MAC address of a sixth terminal, and the sixth terminal is a terminal that accesses the second session management network element.

In a possible implementation, the unicast MAC address of the sixth terminal is obtained by the second user plane network element from uplink unicast packet data of the sixth terminal.

In a possible implementation, the fourth forwarding rule further indicates the third tunnel identifier allocated by the second user plane network element to the target local area network group.

In a possible implementation, the second MAC address is a multicast MAC address of the second group session.

In a possible implementation, the multicast MAC address of the second group session is obtained by the second user plane network element from second multicast packet data of a seventh terminal, and the seventh terminal is a terminal that accesses the second session management network element.

In a possible implementation, the processing module 1301 is further configured to, when it is detected that the first session management network element is faulty, establish a terminal session between the first user plane network element and the second session management network element for a target terminal, where the target terminal is a terminal in the local area network, and the target terminal accesses the first session management network element before the first session management network element is faulty and re-accesses the second session management network element after the first session management network element is faulty.

In a possible implementation, the processing module 1301 is further configured to: delete the terminal session registered by the target terminal with the first session management network element, and delete a group session associated with the first session management network element.

All related content of the steps in the foregoing method embodiments may be cited in function descriptions of the corresponding functional modules. Details are not described herein again.

For example, the communication apparatus 130 may be the access and mobility management network element in the foregoing method embodiments, or an apparatus including the access and mobility management network element, or a component that may be used for the access and mobility management network element.

The communication module 1302 is configured to receive a first session establishment request from an eighth terminal, where the eighth terminal is a terminal in a target local area network, and the first session establishment request is used to request to establish a session for the eighth terminal.

The processing module 1301 is configured to select, in response to the first session establishment request, select a first session management network element from a first session management network element list, where the first session management network element list includes a plurality of session management network elements that provide a session management function for the target local area network.

The communication module 1302 is further configured to send a second session establishment request to the first session management network element, where the second session establishment request is used to request to establish a session for the eighth terminal.

In a possible implementation, the communication module 1302 is further configured to send a session management network element list request message to a network repository network element, where the session management network element list request message is used to request a session management network element that provides the session management function for the target local area network; and the communication module 1302 is further configured to receive a session management network element list response message from the network repository network element, where the session management network element list response message indicates the first session management network element list.

In a possible implementation, the processing module 1301 is further configured to select the first session management network element based on loads of the plurality of session management network elements in the first session management network element list.

Optionally, the module in FIG. 13 may also be referred to as a unit. For example, the processing module may be referred to as a processing unit, and the communication module may be referred to as a communication unit. In addition, in the embodiment shown in FIG. 13, a name of each unit may not be the name shown in the figure. For example, the communication module may also be referred to as a transceiver module or a transceiver unit.

When each unit in FIG. 13 is implemented in a form of a software functional module and sold or used as an independent product, the unit may be stored in a computer-readable storage medium. Based on such an understanding, the technical solutions in embodiments of this application essentially, or the part contributing to the conventional technologies, or all or a part of the technical solutions may be implemented in the form of a software product. The computer software product is stored in a storage medium and includes several instructions for instructing a computer device (which may be a personal computer, a server, or a network device) or a processor (processor) to perform all or a part of the steps of the method in embodiments of this application. A storage medium for storing the computer software product includes any medium that can store program code, like a USB flash drive, a removable hard disk drive, a read-only memory (read-only memory, ROM), a random access memory (random access memory, RAM), a magnetic disk, or an optical disc.

In this embodiment of this application, the communication apparatus 130 is presented in a form of functional modules obtained through division in an integrated manner. The "module" herein may be a specific ASIC, a circuit, a processor that executes one or more software or firmware programs, a memory, an integrated logic circuit, and/or another component capable of providing the foregoing functions.

An embodiment of this application further provides a computer-readable storage medium, including instructions. When the instructions are run on a computer, the computer is caused to perform any one of the foregoing methods.

An embodiment of this application further provides a computer program product including instructions. When the instructions are run on a computer, the computer is caused to perform any one of the foregoing methods.

An embodiment of this application further provides a chip, including a processor and an interface. The processor is coupled to a memory through the interface. When the processor executes a computer program or instructions in the memory, any one of the methods provided in the foregoing embodiments is performed.

An embodiment of this application further provides a communication system, including the first user plane network element, the first session management network element, and the second session management network element in the foregoing embodiments.

All or a part of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD for short)), or the like.

Although this application is described with reference to embodiments, in a process of implementing this application that claims protection, a person skilled in the art may understand and implement another variation of disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to features and embodiments thereof, it is clear that various modifications and combinations may be made to them without departing from the spirit and scope of this application. Correspondingly, this specification and accompanying drawings are merely example descriptions of this application defined by the appended claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that such modifications and variations fall within the scope of the claims of this application and equivalent technologies thereof.

The foregoing descriptions are merely implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, applied to a first user plane network element, wherein the method comprises:
receiving a first session establishment request message from a first session management network element, and receiving a second session establishment request message from a second session management network element, wherein both the first session management network element and the second session management network element are configured to provide a session management function for a target local area network; the first session establishment request message is used to request to establish a first group session between the first session management network element and the first user plane network element, and the second group session establishment request message is used to request to establish a second group session between the second session management network element and the first user plane network element; and both the first group session and the second group session are group sessions of the target local area network; and
establishing the first group session based on the first session establishment request message, and establishing the second group session based on the second session establishment request message.

2. The method according to claim 1, wherein both the first session management network element and the second session management network element are session management network elements in a first session management network element list; and a plurality of session management network elements in the first session management network element list are all configured to provide the session management function for the target local area network.

3. The method according to claim 1 or 2, wherein the second session establishment request is a group session establishment request message generated by the second session management network element after a first terminal is disconnected from the first session management network element and re-accesses the second session management network element; or
the second group session establishment request is a group session establishment request message generated by the second session management network element after a second terminal accesses the second session management network element, wherein
both the first terminal and the second terminal are terminals in the target local area network.

4. The method according to any one of claims 1 to 3, wherein the first group session establishment request message comprises at least one of the following: an identifier of the target local area network and a first forwarding rule, and the first forwarding rule represents a rule for forwarding data by the first user plane network element.

5. The method according to claim 4, wherein the first forwarding rule comprises at least one of the following: a first downlink broadcast, unknown-unicast, multicast BUM forwarding rule, a first uplink BUM forwarding rule, and an inter-user plane network element BUM forwarding rule, wherein
the first downlink BUM forwarding rule is: a target user plane network element forwards a downlink BUM data packet to each terminal that is in the target local area network and that accesses the target user plane network element, and does not forward the downlink BUM data packet to an N19 interface, wherein the target user plane network element is a user plane network element that receives the first forwarding rule;
the first uplink BUM forwarding rule is: the target user plane network element forwards an uplink BUM data packet to the N19 interface and an N6 interface, and sends the uplink BUM data packet to a third terminal, wherein the third terminal is a terminal, other than a terminal that sends the uplink BUM data packet, in terminals that are in the target local area network and that access the target user plane network element; and
the inter-user plane network element BUM forwarding rule is: the target user plane network element forwards an inter-user plane network element BUM to each terminal that is in the target local area network and that accesses the target user plane network element.

6. The method according to claim 4, wherein the first forwarding rule comprises at least one of the following: a second downlink BUM forwarding rule and a second uplink BUM forwarding rule, wherein
the second downlink BUM forwarding rule is: a target user plane network element forwards a downlink BUM data packet to each terminal that is in the target local area network and that accesses the target user plane network element, wherein the target user plane network element is a user plane network element that receives the first forwarding rule; and
the second uplink BUM forwarding rule is: the target user plane network element forwards an uplink BUM data packet to an N6 interface, and sends the uplink BUM data packet to a fourth terminal, wherein the fourth terminal is a terminal, other than a terminal that sends the uplink BUM data packet, in terminals that are in the target local area network and that access the target user plane network element.

7. The method according to any one of claims 1 to 6, wherein the method further comprises:
sending a first response message to the first session management network element, wherein the first response message indicates that the first user plane network element has established the first group session, and the first response message comprises at least one of the following: a first tunnel identifier allocated by the first user plane network element to the first group session and a node identifier of the first user plane network element; and
sending a second response message to the second session management network element, wherein the second response message indicates that the first user plane network element has established the second group session, and the second response message comprises at least one of the following: a second tunnel identifier allocated by the first user plane network element to the second group session and the node identifier of the first user plane network element.

8. The method according to claim 7, wherein when a plurality of user plane network elements communicate with each other through preset interfaces, the first tunnel identifier and the second tunnel identifier are tunnel identifiers associated with the preset interfaces, and the plurality of user plane network elements comprise the first user plane network element.

9. The method according to claim 8, wherein the method further comprises:
determining group subscription attribute information of the target local area network; and
determining, based on the group subscription attribute information, that the plurality of user plane network elements communicate with each other through the preset interfaces.

10. The method according to claim 9, wherein a manner of determining the group subscription attribute information of the target local area network comprises at least one of the following:
obtaining the group attribute subscription information preconfigured in the first user plane network element;
and/or
receiving the group attribute subscription information from the first session management network element, wherein the group attribute subscription information is preconfigured in the first session management network element, and/or the group attribute subscription information is obtained by the first session management network element from a unified data management network element.

11. The method according to any one of claims 1 to 10, wherein the method further comprises:
receiving a first session modification request message from the first session management network element or the second session management network element, wherein the first session modification request message carries a second forwarding rule, and the second forwarding rule represents a forwarding rule for broadcasting data by the first user plane network element.

12. The method according to claim 11, wherein the second forwarding rule further comprises a third tunnel identifier allocated by a second user plane network element to the target local area network and a node identifier of the second user plane network element; and the second user plane network element is a user plane network element configured to provide a user plane function for the target local area network.

13. The method according to any one of claims 1 to 12, wherein the method further comprises:
receiving a second session modification request message from the first session management network element, wherein the second session modification request message carries a third forwarding rule, and the third forwarding rule represents a forwarding rule for forwarding, by the first user plane network element, data whose destination address is a first media access control MAC address;
establishing a first correspondence between the first MAC address and a first terminal session, wherein the first terminal session is a session of a terminal that reports the first MAC address; and
recording the first correspondence in the group session of the target local area network, wherein the first correspondence is used for forwarding, by the first user plane network element by using the first terminal session, a data packet whose destination address is the first MAC address.

14. The method according to claim 13, wherein the first MAC address is a unicast MAC address of a fourth terminal, and the fourth terminal is a terminal that accesses the first session management network element.

15. The method according to claim 14, wherein the method further comprises:
receiving uplink unicast packet data from the fourth terminal, wherein the uplink unicast packet data comprises the unicast MAC address of the fourth terminal; and
sending the unicast MAC address of the fourth terminal to the first session management network element.

16. The method according to claim 13, wherein the first MAC address is a multicast MAC address of the first group session.

17. The method according to claim 16, wherein the method further comprises:
receiving first multicast packet data from a fifth terminal, wherein the first multicast packet data comprises the multicast MAC address of the first group session; and
sending the multicast MAC address of the first group session to the first session management network element and the second session management network element.

18. The method according to any one of claims 1 to 17, wherein the method further comprises:
receiving a third session modification request message from the second session management network element, wherein the third session modification request message carries a fourth forwarding rule, and the fourth forwarding rule represents a forwarding rule for forwarding, by the first user plane network element, data whose destination address is a second MAC address; and
sending a third session modification response message to the second session management network element.

19. The method according to claim 18, wherein the second MAC address is a unicast MAC address of a sixth terminal, and the sixth terminal is a terminal that accesses the second session management network element.

20. The method according to claim 19, wherein the unicast MAC address of the sixth terminal is obtained by the second user plane network element from uplink unicast packet data of the sixth terminal.

21. The method according to any one of claims 18 to 20, wherein the fourth forwarding rule further indicates the third tunnel identifier allocated by the second user plane network element to the target local area network.

22. The method according to claim 18, wherein the second MAC address is a multicast MAC address of the second group session.

23. The method according to claim 22, wherein the multicast MAC address of the second group session is obtained by the second user plane network element from second multicast packet data of a seventh terminal, and the seventh terminal is a terminal that accesses the second session management network element.

24. The method according to any one of claims 1 to 23, wherein the method further comprises:
when it is detected that the first session management network element is faulty, establishing a terminal session between the first user plane network element and the second session management network element for a target terminal, wherein the target terminal is a terminal in the target local area network, and the target terminal accesses the first session management network element before the first session management network element is faulty and re-accesses the second session management network element after the first session management network element is faulty.

25. The method according to claim 24, wherein the method further comprises:
deleting the terminal session registered by the target terminal with the first session management network element, and deleting a group session associated with the first session management network element.

26. A communication apparatus, comprising a functional unit configured to perform the method according to any one of claims 1 to 25, wherein an action performed by the functional unit is implemented by hardware or implemented by hardware executing corresponding software.

27. A communication apparatus, comprising a processor, wherein
the processor is connected to a memory, the memory is configured to store computer-executable instructions, and the processor executes the computer-executable instructions stored in the memory, to cause the communication apparatus to implement the method according to any one of claims 1 to 25.

28. A computer-readable storage medium, comprising instructions, wherein when the instructions are run on a computer, the computer is caused to perform the method according to any one of claims 1 to 25.

29. A communication system, wherein the communication system comprises a first user plane network element, a first session management network element, and a second session management network element, and both the first session management network element and the second session management network element are configured to provide a session management function for a target local area network;
the first session management network element is configured to send a first session establishment request message to the first user plane network element, and the first session establishment request message is used to request to establish a first group session between the first session management network element and the first user plane network element;
the second session management network element is configured to send a second session establishment request message to the first user plane network element, the second session establishment request message is used to request to establish a second group session between the second session management network element and the first user plane network element, and both the first group session and the second group session are group sessions of the target local area network; and
the first user plane network element is configured to: receive the first session establishment request message from the first session management network element, receive the second session establishment request message from the second session management network element, establish the first group session based on the first session establishment request message, and establish the second group session based on the second session establishment request message.

30. The communication system according to claim 29, wherein the communication system further comprises an access and mobility management network element;
the access and mobility management network element is configured to obtain a first session management network element list, a plurality of session management network elements in the first session management network element list are all configured to provide the session management function for the target local area network, and the plurality of session management network elements comprise the first session management network element and the second session management network element; and
the access and mobility management network element is further configured to select the first session management network element from the first session management network element list.
